# NEUE EUROPÄISCHE PATENTSCHRIFT

(11) **EP 2 771 965 B2**
(45) Veröffentlichungstag und Bekanntmachung des Hinweises auf die Entscheidung über den Einspruch: **08.01.2020**
(45) Hinweis auf die Patenterteilung: 14.12.2016
(21) Anmeldenummer: 12780461.5
(22) Anmeldetag: 15.10.2012
(51) Int. Cl.: H02K 1/14, H02K 1/22, H02K 21/04

(54) **ELEKTRISCHE MASCHINE, INSBESONDERE WECHSELSTROMGENERATOR**
ELECTRIC MACHINE, IN PARTICULAR AC GENERATOR
MACHINE ÉLECTRIQUE, EN PARTICULIER GÉNÉRATRICE À COURANT ALTERNATIF

(30) Priorität: 28.10.2011 DE 102011085429
(43) Veröffentlichungstag der Anmeldung: 03.09.2014
(73) Patentinhaber: SEG Automotive Germany GmbH, 70499 Stuttgart (DE)
(72) Erfinder: RADEMACHER, Guenter, 70794 Filderstadt-Harthausen (DE); NARIO-RIVERA, Gianna, 44139 Dortmund (DE); HERBOLD, Klaus, 71679 Asperg (DE); MEYER, Reinhard, 74321 Bietigheim-Bissingen (DE); RETANA HERNANDEZ, Roberto Carlos, 70180 Stuttgart (DE); DAYAN, Christian, 71638 Ludwigsburg (DE)
(74) Vertreter: Steinbauer, Florian
(86) Internationale Anmeldenummer: PCT/EP2012/070411
(87) Internationale Veröffentlichungsnummer: WO 2013/060593

(56) Entgegenhaltungen:
- EP-A1- 0 394 528
- EP-A1- 1 078 438
- EP-A2- 1 089 417
- WO-A1-2011/131871
- DE-A1-102007 038 668
- JP-A- S57 101 553
- US-A- 5 543 676
- US-A- 5 838 085
- US-A1- 2005 156 479
- US-A1- 2006 290 232
- US-A1- 2010 090 640
- US-A1- 2011 095 637
- US-B1- 6 359 366
- "terres rares", GUIDE DES AIMANTS ARELEC, 1996, page 30, 34, 36, XP055417856,

## Beschreibung

### Stand der Technik

Aus der DE 1 209 651 B1 ist ein Klauenpolgenerator bekannt, bei dem zur Streuflusskompensation Permanentmagnete verwendet werden.

Aus der US 5,780,953 ist bekannt als Permanentmagnet entweder einen Magneten zu verwenden, der aus Pulver von seltenen Erden hergestellt ist, das durch einen Kunststoff (Harz) gebunden ist. Alternativ werden für die Permanentmagnete Ferritmagnete vorgeschlagen.

Aus der US 2001/0127873 A1 ist bekannt, in einem Zwischenraum zwischen zwei Klauenpolen einen Magnetteil zu verwenden, der aus einer Kombination zweier verschiedener Materialien besteht. Eines der Materialien soll aus seltenen Erden bestehen, das andere aus Ferriten.

Aus der US 2009/0218901 A1 ist ein Klauenpolläufer bekannt, bei dem Permanentmagnete nicht in jedem Zwischenraum angeordnet sind, es handelt sich hierbei um eine so genannte Teilbestückung.

Aus der JP 11-98787 ist ebenfalls eine derartige Teilbestückung bekannt.

Aus der DE 10 2007 038 668 A1 ist eine elektrische Maschine bekannt, die Rotorpole aufweist, die aus Permanentmagneten aufgebaut sind. Einzelne Pole sind aus zumindest drei Permanentmagneten aufgebaut. Zwischen den Permanentmagneten als Polen sind keine Permanentmagnete zur Kompensation von Streufluss zwischen den Polen offenbart.

Aus der US 2010/0090640 A1 ist eine elektrische Maschine bekannt, deren Rotor einzelne Pole aufweist. Diese einzelnen Pole sind dadurch ausgebildet, dass abwechselnd Magnetmaterialien für einen Pol aus Neodym und für einen anderen benachbarten Pol aus AlNiCo verwendet werden. Zwischen diesen Polen sind keine Vorrichtungen zur Kompensation von Streufluss angeordnet.

Aus der US 2011/0095637 A1 ist ein Klauenpolläufer bekannt, der in den Zwischenräumen zwischen den einzelnen Klauen Permanentmagnete aufweist. Aus diesem Dokument ist bekannt, für jeweils einen kompletten Läufer eine Art Permanentmagnete zu verwenden.

### Geänderte Beschreibungsabsätze

Aus dem Dokument US 6,359,366 B1 ist ein Klauenpolläufer bekannt, dessen in den Klauenpolzwischenräumen angeordnete Permanentmagnete derartig magnetisiert sind, dass sich dadurch ein Streufluss verstärkt. Aus der WO 2011/131871 A1 ist eine elektrische Maschine, insbesondere ein Wechselstromgenerator, bekannt, bei dem in zwei Zwischenräumen zwischen Klauenpolen Permanentmagnete mit voneinander verschiedener Remanenz eingebracht sind.

### Offenbarung der Erfindung

### Vorteile der Erfindung

Gemäß den Merkmalen des Gegenstands des Hauptanspruchs ist unter anderem vorgesehen, dass in Zwischenräumen zwischen verschieden polbaren Polen der elektrischen Maschine Vorrichtungen zur Kompensation von Streufluss mit einem Wirkkörper eingebracht sind und in einem anderen Zwischenraum ebenfalls eine Vorrichtung zur Kompensation von Streufluss eingebracht ist, wobei in dieser anderen Vorrichtung ein anders aufgebauter Wirkkörper angeordnet ist.

Zwecks Optmierung der Auslegung ist erfindungsgemäß vorgesehen, dass die Wirkkörper der unterschiedlichen Vorrichtungen unterschiedliche Remanenzen aufweisen. Es ist dabei vorgesehen, dass manche Wirkkörper größere Remanenzen aufweisen als andere Wirkkörper.

Dies hat den Vorteil, dass - ausgehend von einer einmal gewählten Baugröße einer elektrischen Maschine - durch gezielte Auswahl von technisch unterschiedlich aufgebauten Wirkkörpern die Eigenschaften der elektrischen Maschine sehr fein abgestuft variiert werden können. Man erhält somit eine sehr hohe Flexibilität bei der Auslegung der elektrischen Maschine hinsichtlich der Abgabefähigkeit für elektrischen Strom. Zudem ist durch die Variation der einzelnen Wirkkörper hinsichtlich der Kosten eine sehr gute Variabilität möglich.

Weitere Vorteile ergeben sich für die Gegenstände gemäß den Unteransprüchen. Zwecks Optimierung der Auslegung ist vorgesehen, dass die Wirkkörper der unterschiedlichen Vorrichtungen unterschiedliche Remanenzen aufweisen. Es ist dabei vorgesehen, dass manche Wirkkörper größere Remanenzen aufweisen als andere Wirkkörper. Insbesondere ist vorgesehen, dass drei verschiedene Wirkkörper in der elektrischen Maschine verwendet werden, wobei diese technisch unterschiedlichen Wirkkörper insgesamt drei verschiedene Remanenzen aufweisen. Zwecks geeigneter Optimierung ist dabei vorgesehen, dass die Wirkkörper eine Remanenz aufweisen, die zwischen 0,2 Tesla und 1,51 Tesla groß ist. Zur Vermeidung von Unwucht im Rotor ist vorgesehen, dass die Summe bzw. Vektorsumme der in den Schwerpunkten wirkenden Fliehkräfte der Vorrichtungen zur Kompensation von Streufluss so angeordnet sind, dass der gemeinsame Schwerpunkt aller Vorrichtungen in Summe in der Drehachse oder zumindest in der Rotorwelle liegt. Eine möglichst geringe Unwucht führt dazu, dass die Lagerbelastungen aus einer eventuellen Unwucht heraus ebenso gering ist und damit die Lebensdauer von Lagern möglichst groß. Auch in diesem Zusammenhang ist vorgesehen, dass die Anordnung der Vorrichtungen zur Kompensation von Streufluss im Rotor symmetrisch ist, insbesondere punktsymmetrisch oder spie gelsymmetrisch. Um eine besonders günstige Anordnung bezüglich einer eventuellen Unwucht bzw. zur Umwuchtvermeidung zu erhalten, hat sich herausgestellt, dass es sinnvoll ist, die technisch unterschiedlichen Vorrichtungen zur Kompensation von Streufluss im Rotor in einem Grundmuster anzuordnen, wobei sich dieses Grundmuster bei elektrischen Maschinen mit unterschiedlichen Polzahlen bzw. unterschiedlicher Anzahl an Polen im Rotor unterschiedlich häufig wiederholt. Ein Grundmuster ist dabei eine bestimmte Anordnung von Wirkkörpern unterschiedlicher technischer Eigenschaften in bestimmten Reihenfolgen.

Bei der Definition dieser Grundmuster ist auch vorgesehen, dass dieses in einer Abwandlung mindestens einen leeren Zwischenraum aufweist.

Gemäß einer weiteren Ausgestaltung der Erfindung ist vorgesehen, dass ein Wirkkörper einer Vorrichtung zur Kompensation von Streufluss eine Stelle aufweist, die maximal von der Drehachse entfernt ist. Gleiches gilt für einen anderen Wirkkörper, der technisch unterschiedlich aufgebaut ist. Es ist dabei vorgesehen, dass eine maximale Entfernung der Stelle des einen Wirkkörpers größer als die maximale Entfernung der Stelle des anderen Wirkkörpers ist. Dies hat den Vorteil, dass die Wirkkörper abhängig von einer bestimmten Eigenschaft unterschiedlich stark gewissen Belastungen ausgesetzt sind. Ist die spezifisch elektrische Leitfähigkeit eines Wirkkörpers nämlich größer als die des anderen Wirkkörpers, so ist vorgesehen, dass die bereits erwähnte Stelle verglichen mit der des anderen Wirkkörpers radial weiter innen ist. Mit anderen Worten, die Wirkkörper mit der geringeren spezifischen elektrischen Leitfähigkeit sind mit der nach radial außen gerichteten Oberfläche radial weiter außen. Um zu erreichen, dass eine mechanische Belastung der Pole durch die Wirkkörper bzw. der Vorrichtungen zur Kompensation von Streufluss möglichst gleichmäßig an den ablaufenden bzw. auflaufenden Kanten eines Pols ist, ist erfindungsgemäß vorgesehen, dass sich die räumliche Gestalt eines Wirkkörpers einer Vorrichtung zur Kompensation von Streufluss von der räumlichen Gestalt eines Wirkkörpers einer anderen sich technisch unterscheidenden Vorrichtung zur Kompensation von Streufluss unterscheidet. Bei entsprechender Auslegung führt dies dazu, dass die Massen unterschiedlicher Wirkkörper zwar gleich sind, die Volumina jedoch unterschiedlich. Zwecks Optimierung der Auslegung ist vorgesehen, dass ggf. mindestens ein Zwischenraum, vorzugsweise mindestens zwei Zwischenräume keine Vorrichtung zur Kompensation von Streufluss aufweisen. Des Weiteren ist vorgesehen, dass zwecks Massenausgleich (Schwerpunktlage) die Wirkkörper technisch unterschiedlicher Vorrichtungen zur Kompensation von Streufluss das gleiche Gewicht aufweisen. Dies gilt ganz besonders für die Wirkkörper, die sich - bezogen auf die Drehachse des Rotors - einander gegenüber befinden (Punktsymmetrie). Des Weiteren ist vorgesehen, dass der Wirkkörper mit der kleinsten Remanenz ein Permanentmagnet aus Ferriten ("Ferritmagnet") und der Wirkkörper mit einer größeren Remanenz als der von Ferritmagneten ein so genannter Seltenerdmagnet ist. Für den Fall, dass ein dritter Typ eines Wirkkörpers vorgesehen wird, soll dessen Remanenz größer als die des bereits erwähnten Wirkkörpers aus seltenen Erden sein und zudem ebenfalls ein so genannter Seltenerdmagnet, jedoch aus einer anderen Zusammensetzung, sein.

### Beschreibung der Zeichnung

Die Erfindung wird im Folgenden beispielhaft anhand der Figuren näher erläutert. Es zeigen:
- Figur 1: einen Längsschnitt durch eine elektrische Maschine in Gestalt eines Wechselstromgenerators,
- Figur 2: eine räumliche Ansicht des Rotors der elektrischen Maschine,
- Figur 3: eine Abwicklung der elektromagnetisch wirksamen Oberfläche des Rotors einer sechzehnpoligen Maschine,
- Figur 4, 5, 6: drei verschiedene Bestückungsvarianten für sechzehnpolige Rotoren mit zwei verschiedenen Typen von Wirkkörpern,
- Figur 7a: ein weiteres Ausführungsbeispiel eines Rotors mit Vollbestückung und zwölf Polen,
- Figur 7b: ein schematischer Querschnitt durch den Rotor aus Figur 7a
- Figur 8 bis Figur 17: verschiedene Ausführungsbeispiele für Rotoren mit verschiedenen Polzahlen und unterschiedlichen Anordnungen von Wirkkörpern im Rotor,
- Figur 18: beispielhaft die Situation zweier verschiedener Wirkkörper in einem Rotor,
- Figur 19: die räumliche Gestalt eines Wirkkörpers eines Typs im Vergleich mit einem Wirkkörper eines anderen Typs,
- Figur 20: fünf verschiedene Ausführungsbeispiele von Wirkkörpern.

### Ausführung der Erfindung

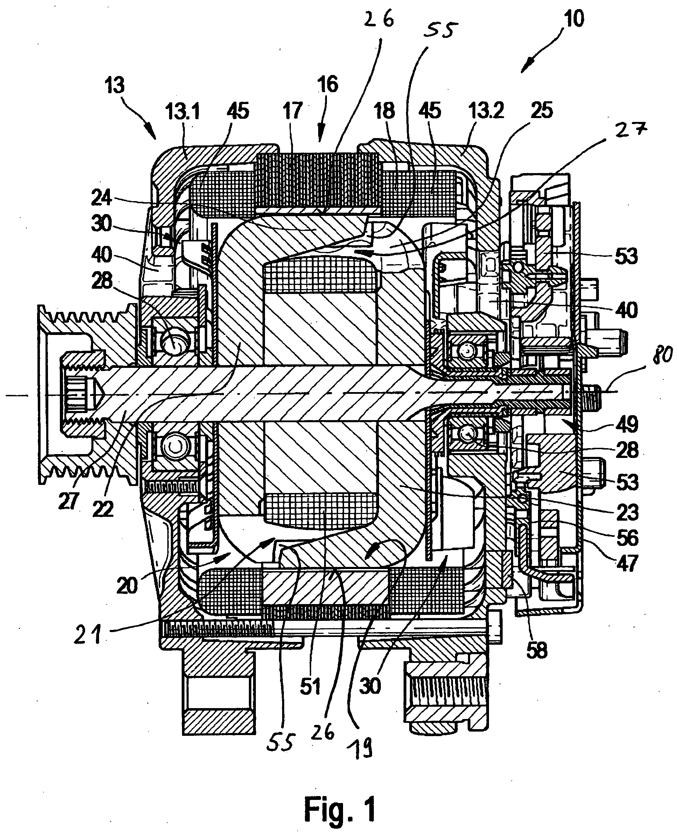

In Figur 1 ist ein Querschnitt durch eine elektrische Maschine 10, hier in der Ausführung als Generator bzw. Wechsel-, insbesondere Drehstromgenerator, für Kraftfahrzeuge, dargestellt. Diese elektrische Maschine 10 weist u. a. ein zweiteiliges Gehäuse 13 auf, das ein erstes Lagerschild 13.1 und ein zweites Lagerschild 13.2 umfasst. Das Lagerschild 13.1 und das Lagerschild 13.2 nehmen in sich einen sogenannten Stator 16 auf, der einerseits ein im Wesentlichen kreisringförmiges Ständereisen 17 umfasst, in dessen nach radial innen gerichteten, sich axial erstreckenden Nuten eine Ständerwicklung 18 eingefügt ist. Dieser ringförmige Stator 16 umgibt mit seiner radial nach innen gerichteten genuteten Oberfläche, die eine elektromagnetisch wirksame Oberfläche 19 ist, einen Rotor 20, der hier beispielsweise als Klauenpolläufer ausgebildet ist. Die elektromagnetisch wirksame Oberfläche 19 ist hier aus vielen Einzeloberflächen gebildet, die sich durch die Flächen des Ständereisens 17 ergeben, die dem Rotor 20 gegenüberstehen. Der Rotor 20 umfasst u. a. zwei Klauenpolplatinen 22 und 23, an deren Außenumfang jeweils sich in axialer Richtung erstreckende Klauenpolfinger als polbare Pole 24 und 25 angeordnet sind. Beide Klauenpolplatinen 22 und 23 sind im Rotor 20 derart angeordnet, dass deren sich in axiale Richtung erstreckende Klauenpolfinger bzw. Pole 24 bzw. 25 am Umfang des Rotors 20 einander abwechseln. Der Rotor 20 hat demnach ebenfalls eine elektromagnetisch wirksame Oberfläche 26, die hier aus vielen einzelnen Oberflächen der Pole 24 und 25 gebildet sind, die dem Stator 16 gegenüberstehen. Es ergeben sich durch die sich am Umfang abwechselnden Pole 24 bzw. 25 magnetisch erforderliche Zwischenräume 21, die hier auch als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 durch hier in dieser Figur 1 nicht dargestellte Öffnungen einen Weg nach radial außen.

Die in Figur 1 dargestellte und sich auf der rechten Seite des Generators befindende Schutzkappe 47 schützt verschiedene Bauteile vor Umgebungseinflüssen. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Dieser Pluskühlkörper heißt Pluskühlkörper, weil dieser elektrisch leitfähig mit einem Pluspol eines Akkumulators (z. B. Starterstromversorgung) verbunden ist. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

In Figur 1 ist des Weiteren schematisch dargestellt, dass in den Zwischenräumen 21 Wirkkörper 55 angeordnet sind.

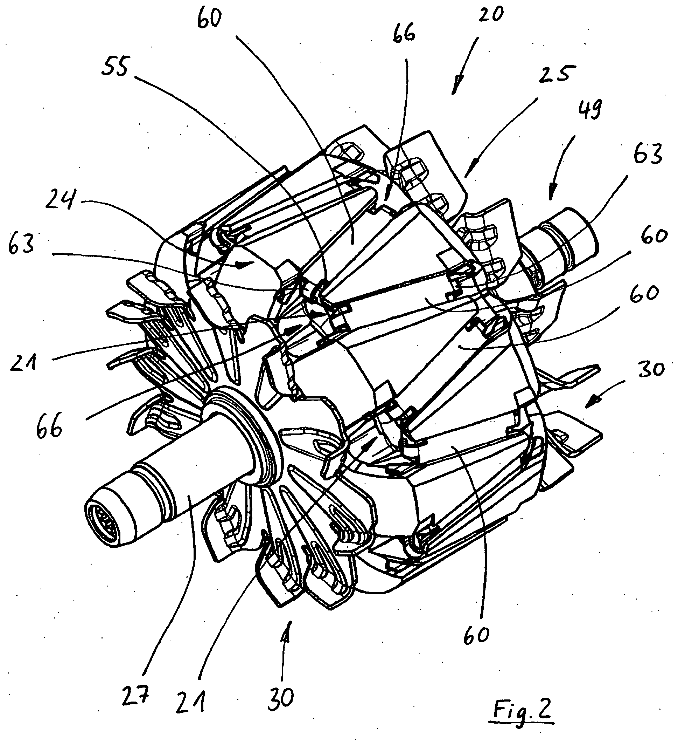

In Figur 2 ist eine räumliche Ansicht des Rotors 20 der elektrischen Maschine 10 dargestellt. Am Außenumfang des Rotors 20 wechseln sich gut erkennbar Pole 24 und Pole 25 ab. Zwischen den Polen 24 und 25 sind die Zwischenräume 21 gut zu erkennen. Ein jeder Pol 24 bzw. 25 hat eine Polseite, die hier nicht bezeichnet ist. Eine jede dieser Polseiten begrenzt eine Seite eines Zwischenraums 21, hier leicht geneigt zur Umfangsrichtung. In einer jeden Polseite ist in diesem Ausführungsbeispiel eine Polseitennut eingebracht, die hier weder bezeichnet noch besonders gut zu erkennen ist. Dies ist in einer der nachfolgenden Figuren deutlicher dargestellt. In zwei einander gegenüberstehenden Polseitennuten gegenpoliger Pole 24 und 25 ist ein plattenförmiges Halteelement mit Seitenkanten eingeschoben. Ein jedes plattenförmiges Halteelement 60 hat an seinen axialen Enden jeweils eine Halteklammer 63. Zwischen den zwei Halteklammern 63 eines plattenförmigen Halteelements 60 ist ein Wirkkörper 55 eingeklemmt. Eine solche Unterbaugruppe, aufweisend ein plattenförmiges Halteelement 60 mit Wirkkörper 55, wird hier auch als Vorrichtung 66 zur Kompensation von Streufluss bezeichnet.

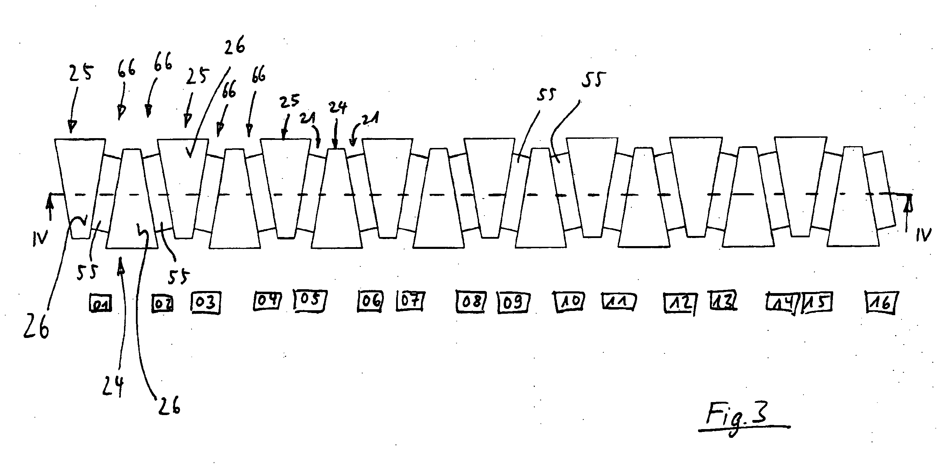

In Figur 3 ist eine Abwicklung der Außenansicht eines sechzehnpoligen Rotors 20, wie er beispielsweise in Figur 2 dargestellt ist, in schematischer Weise mit den Vorrichtungen 66 zur Kompensation von Streufluss mit einem Wirkkörper 55 dargestellt. Der Einfachheit halber sind hier vor allem die Wirkkörper 55 der Vorrichtungen 66 dargestellt. Bei der Darstellung gemäß Figur 3 ist eine so genannte Vollbestückung dargestellt. Unter einer Vollbestückung versteht man, dass in jedem Zwischenraum 21 zwischen zwei Polen 24 bzw. 25 eine Vorrichtung 66 angebracht ist. Dies bedeutet gemäß Figur 3, dass an jeder möglichen Position für eine Vorrichtung 66, d. h. in jedem Zwischenraum 21, eine solche Vorrichtung 66 angeordnet ist. Unterhalb eines jeden Zwischenraums 21 ist in einem Kästchen die jeweilige Positionsnummer angegeben, so dass in diesem Fall z. B. sechzehn Positionsnummern vergeben sind.

In der im Anschluss an die wörtliche Beschreibung folgenden Tabelle 1 sind etliche Ausführungsbeispiele für eine Vollbestückung mit Wirkkörpern eines sechzehnpoligen Rotors 20 aufgeführt. In den Zeilen 1 und 2 sind zwei Ausführungsbeispiele angegeben, die bereits bekannt sind. Im ersten Ausführungsbeispiel (Bestückungsvariante 1) sind alle Wirkkörper 55 aus dem Material A vorgesehen. Gemäß der Bestückungsvariante Nummer 2 sind alle Wirkkörper 55 aus dem Material B bereits bekannt.

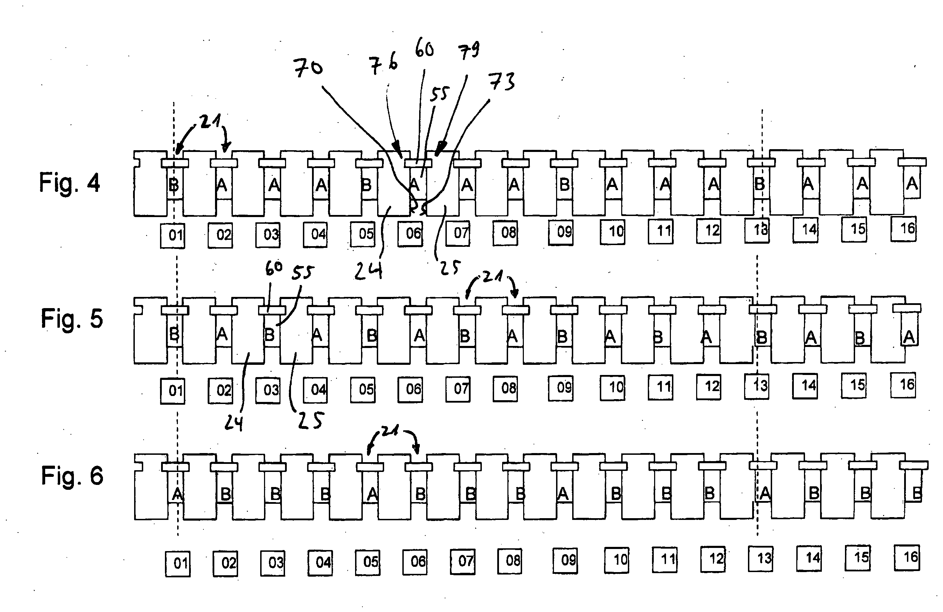

In der Figur 4 ist die Bestückungsvariante 7 aus der Tabelle 1 für sechzehnpolige Rotoren 20 dargestellt. Wie bereits zuvor erwähnt, sind in den Polseiten 70 bzw. 73 der Pole 24 bzw. 25 Polseitennuten 76 bzw. 79 eingearbeitet. In diesen Polseitennuten 76 bzw. 79 ist das plattenförmige Halteelement 60 eingeschoben und stützt nach radial außen einen Wirkkörper 55 ab, wenn sich der Rotor 20 dreht. Gemäß dieser Variante ist vorgesehen, dass drei Viertel der Wirkkörper 55 aus dem Material A und ein Viertel aus dem Material B hergestellt sind.

In Figur 5 ist die Bestückungsvariante 24 aus der Tabelle 1 dargestellt. Gemäß dieser Variante ist vorgesehen, dass zwei Viertel der Wirkkörper 55 aus dem Material A und zwei Viertel aus dem Material B hergestellt sind.

In Figur 6 ist die Bestückungsvariante 35 aus der Tabelle 1 dargestellt. Gemäß dieser Variante ist vorgesehen, dass drei Viertel der Wirkkörper 55 aus dem Material B und ein Viertel aus dem Material A hergestellt sind.

Aus den bisher Beschriebenen ist somit eine elektrische Maschine 10, insbesondere ein Wechselstromgenerator, mit einem Stator 16, der eine elektromagnetisch wirksame Oberfläche 19 aufweist, offenbart. Diese elektrische Maschine weist einen Rotor 20 auf, der ebenfalls eine elektromagnetisch wirksame Oberfläche 26 aufweist. Die elektromagnetisch wirksame Oberfläche 26 des Rotors 20 steht der elektromagnetisch wirksamen Oberfläche 19 des Stators 16 zur Wechselwirkung gegenüber. Der Rotor 20 hat mehrere verschieden polbare Pole 24 und 25. Zwischen den benachbarten, verschieden polbaren Polen 24, 25 sind Zwischenräume 21 zur Poltrennung. In zumindest zwei Zwischenräumen 21 ist je eine Vorrichtung 66 zur Kompensation von Streufluss mit einem Wirkkörper 55 angeordnet. Es ist dabei vorgesehen, dass in einem Zwischenraum 21 eine Vorrichtung 66 zur Kompensation von Streufluss mit einem Wirkkörper 55 und in einem anderen Zwischenraum 21 eine Vorrichtung 66 zur Kompensation von Streufluss mit einem anders aufgebauten Wirkkörper 55 angeordnet ist.

Mit Bezug zu den Ausführungsbeispielen nach Figur 4, Figur 5 und Figur 6 bzw. zu den Bestückungsvarianten mit den Nummern 3 bis 36 der Tabelle 1 sei angemerkt, dass die eine Vorrichtung 66 zur Kompensation von Streufluss einen Wirkkörper 55 mit einer Remanenz R-A und die andere Vorrichtung 66 zur Kompensation von Streufluss einen Wirkkörper 55 mit einer Remanenz R-B aufweist. Es ist dabei vorgesehen, dass die Remanenz R-B größer als die Remanenz R-A ist. Die Remanenz R-A ist die Remanenz der Wirkkörper 55, die vom Typ A sind. Die Remanenz R-B ist die Remanenz der Wirkkörper 55, die vom Typ B sind.

In den weiteren Tabellen 2.1, 2.2, 2.3, 2.4, 2.5 und 2.6 sind Ausführungsbeispiele für eine so genannte Teilbestückung eines sechzehnpoligen Rotors 20 aufgeführt, wobei für die Wirkkörper 55 alternativ die Materialien A mit der Remanenz R-A bzw. B mit der Remanenz R-B aufweisen.

In den Tabellen 3.1, 3.2, 3.3 und 3.4 sind Ausführungsbeispiele für eine Vollbestückung eines sechzehnpoligen Rotors 20 mit den Wirkkörpern der Typen A, B und C gezeigt. Ergänzend zu den Hinweisen bezüglich der Remanenz der Wirkkörper 55 des Typs A und B sei hier erwähnt, dass die Remanenz R-C des Wirkkörpers 55 des Typs C größer als die Remanenz R-B der Wirkkörper 55 des Typs B ist. Insgesamt ist für die Remanenzen der Wirkkörper 55 vorgesehen, dass diese zwischen 0,3 Tesla und 1,45 Tesla ist.

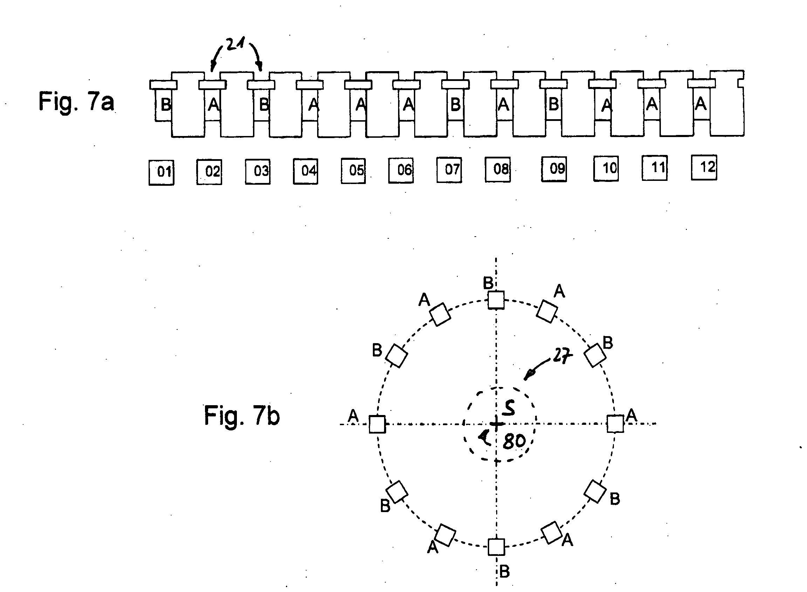

In Figur 7a ist ein weiteres Ausführungsbeispiel für einen Rotor 20 einer elektrischen Maschine 10 dargestellt. In der Tabelle 4.1 sind insgesamt 15 neue Ausführungsbeispiele für die Vollbestückung eines zwölfpoligen Rotors 20 mit Wirkkörpern des Typs A und B dargestellt. Besonders bevorzugte Ausführungsbeispiele sind die Bestückungsvarianten 6, 7 und 15, die in Tabelle 4.1 dargestellt sind. Die in Zeile 1 und 2 dargestellten Varianten sind wiederum voll bestückte Varianten mit entweder ausschließlich Wirkkörpern 55 des Typs A oder ausschließlich Wirkkörpern des Typs B. Beide Varianten sind hier nicht Teil der Erfindung und sind lediglich zu Vergleichszwecken angegeben.

Gemäß den in Tabelle 4.1 dargestellten bevorzugten Varianten ist beispielhaft vorgesehen, dass zwei Drittel der Wirkkörper 55 aus dem Material A und ein Drittel aus dem Material B hergestellt sind. Nach einem anderen Beispiel ist vorgesehen, dass zwei Drittel der Wirkkörper 55 aus dem Material B und ein Drittel aus dem Material A hergestellt sind.

In den nachfolgenden Tabellen 5.1, 5.2 und 5.3 sind Ausführungsbeispiele für Teilbestückung eines zwölfpoligen Rotors dargestellt, wobei hier wieder Wirkkörper 55 des Typs A und Typs B verwendet sind. In den Tabellen 6.1 und 6.2 sind weitere Ausführungsbeispiele für die Bestückung eines zwölfpoligen Rotors 20 angegeben, wobei hierbei die Wirkkörper 55 insgesamt zu den Typen A, B oder C gehören.

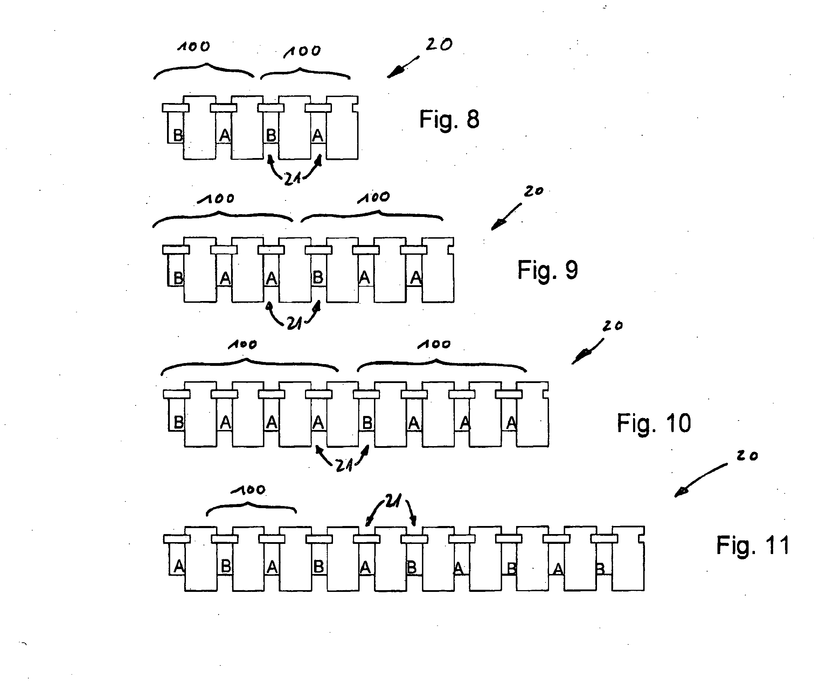

Bei der Auslegung der elektrischen Maschine ist vorgesehen, dass die Vorrichtung 66 zur Kompensation von Streufluss so in den Rotor 20 angeordnet sind, dass ein gemeinsamer Schwerpunkt S aller Vorrichtungen 66 in Summe a) in der Drehachse 80 oder zumindest in der Rotorwelle 27 liegt, s. a. Figur 7b. Um dies zu erreichen ist vorgesehen, dass die Anordnung der Vorrichtungen 66 zur Kompensation von Streufluss im Rotor 20 symmetrisch ist. Dies bedeutet ganz besonders, dass diese Symmetrie eine Punktsymmetrie oder eine Spiegelsymmetrie ist. Im Hinblick auf die Punktsymmetrie bedeutet dies, dass einer Vorrichtung 66 zur Kompensation von Streufluss jenseits der Drehachse 80 des Rotors eine gleichartig aufgebaute Vorrichtung 66 gegenüber angeordnet ist, d. h. beispielsweise, vergleiche auch mit den Anordnungen in Figur 3, dass beispielsweise an Position 01 eine Vorrichtung 66 angeordnet ist, die einen Wirkkörper 55 aus dem Material A aufweist, der gegenüber an der Position 09 wiederum eine Vorrichtung 66 mit einem Wirkkörper 55 aus dem Material A gegenüberliegt. Analog gilt dies selbstverständlich auch für einen Wirkkörper 55, der aus dem Material B oder C besteht. In der axialen Seitenansicht auf den Rotor 20 stellt damit die Drehachse 80 im Endeffekt den Punkt dar, durch den die Symmetrie punktsymmetrisch ist. Zur Verdeutlichung der damit einhergehenden Auslegungsvorschriften, wird auf die Erläuterungen im Zusammenhang mit den Figuren 8 bis 17 verwiesen.

In Figur 8 ist eine gestreckte Schnittdarstellung durch einen Rotor 20 dargestellt. "Gestreckter Schnitt" bedeutet, dass die Pole 24 und 25 in bekannter Weise linear dargestellt sind. Es wird bei der Betrachtung dieser Anordnung von vier Wirkkörpern 55 deutlich, dass die vier Wirkkörper der Typen B, A, B, A in einem speziellen Muster angeordnet sind. Dieses Muster, nachfolgend Grundmuster 100 genannt, ist ein in sich abgeschlossenes Bestückungsmuster, das sich am Umfang des Rotors 20 bzw. in diesem Rotor 20 wiederholt. Bei einem Ausführungsbeispiel nach Figur 8 wiederholt sich dieses Grundmuster 100 gebildet aus den Wirkkörpern 55 der Typen B und A zwei Mal. Dieses Grundmuster findet sich beispielsweise auch in der Tabelle 4.1, Bestückungsvariante 8. Aber auch beispielsweise in der Tabelle 1, Bestückungsvariante 24. Es ist folglich so, dass bei Rotoren 20 mit Anzahlen von Polen 24, 25, die einem Vielfachen von zwei entsprechen, sich das Grundmuster im Rotor mindestens zwei Mal am Umfang des Rotors 20 wiederholt.

In Figur 9 ist ein Rotor 20 schematisch dargestellt, der eine Polzahl von 6 aufweist. Dementsprechend wiederholt sich das Grundmuster 100 mindestens zwei Mal oder drei Mal. Ein Grundmuster 100 aus zwei verschiedenen Magneten A und B wiederholte sich drei Mal, ein Grundmuster 100, bspw. in der Anordnung A-B-B zwei Mal. Das dort dargestellte Grundmuster 100 besteht aus drei in Reihe angeordneten direkt aufeinander folgenden Wirkkörpern 55 der Materialien B, A und A. Dieses Grundmuster findet sich beispielsweise in Tabelle 4.1, Bestückungsvariante 7. Das Grundmuster nach Figur 9 kann selbstverständlich und ohne Weiteres auch auf eine elektrische Maschine mit 12 Polen angewendet werden, so dass sich vier Grundmuster 100 am Umfang wiederholen, siehe insgesamt hierzu die bereits erwähnte Tabelle 4.1, Bestückungsvariante 7.

Gemäß Figur 10 und hier für achtpolige Rotoren 20 ist ein Grundmuster 100 aus vier Wirkkörpern 55 der Typen B und A dargestellt, wobei sich die vier Wirkkörper 55 gemäß den nachfolgend genannten Typen in dieser Reihenfolge und direkt nacheinander zusammensetzt: B-A-A-A. Ein derartiges Muster findet sich beispielsweise in Tabelle 4.1, Bestückungsvariante 4, wobei in dem dort gegebenen Beispiel aufgrund der Polzahl von 12 sich das Grundmuster 100 drei Mal am Umfang wiederholt. Für ein Ausführungsbeispiel mit 16 Polen, siehe auch Tabelle 1, wiederholt sich dieses Grundmuster 100 dann insgesamt vier Mal, Bestückungsvariante 7.

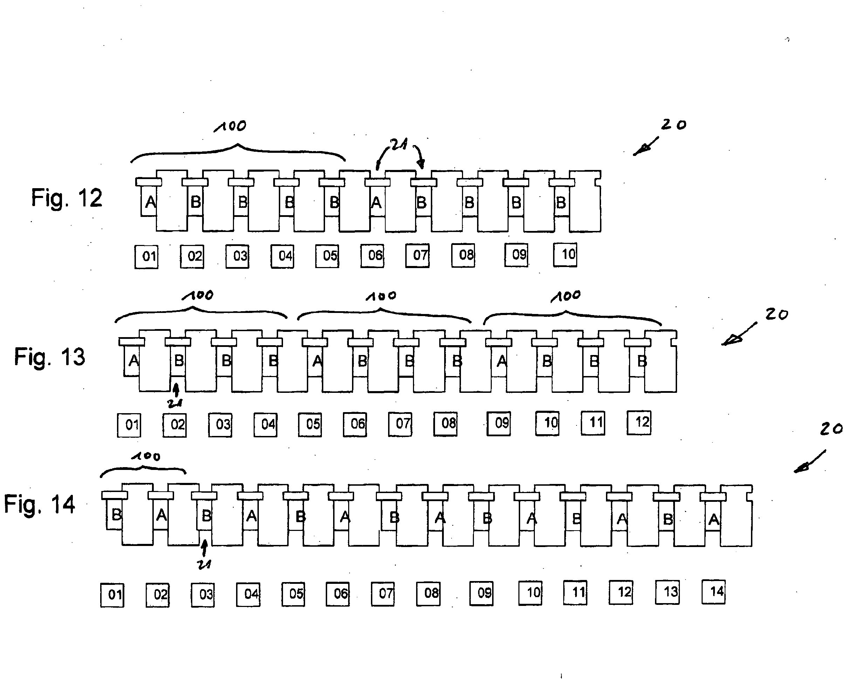

In Figur 11 ist ein Rotor 20 dargestellt, der 10 Pole aufweist. Das dort offenbarte Grundmuster 100 besteht aus den bereits gezeigten Wirkkörpern 55 in der Reihenfolge B-A, die sich insgesamt am Umfang fünf Mal wiederholt. In Figur 12 ist wieder ein Rotor 20 dargestellt, der hier Wirkkörper 55 trägt, die ein Grundmuster 100 bilden, das hier aus fünf verschiedenen Wirkkörpern 55 in der Reihenfolge A-B-B-B-B besteht. Dieses Grundmuster 100 wiederholt sich zwei Mal am Umfang. In Figur 13 ist ein zwölfpoliger Rotor 20 dargestellt, bei dem sich das Grundmuster 100 drei Mal am Umfang wiederholt. Das Grundmuster 100 ist hier die Reihenfolge von Wirkkörpern 55 des Typs A-B-B-B. Dieses Grundmuster ist in Tabelle 4.1, Zeile 16 bzw. Bestückungsvariante 16 abgebildet. In Figur 14 ist ein vierzehnpoliger Rotor 20 dargestellt, bei dem sich das einfache Grundmuster 100, gebildet aus den beiden Wirkkörpern 55 des Typs B-A, insgesamt sieben Mal am Umfang wiederholt.

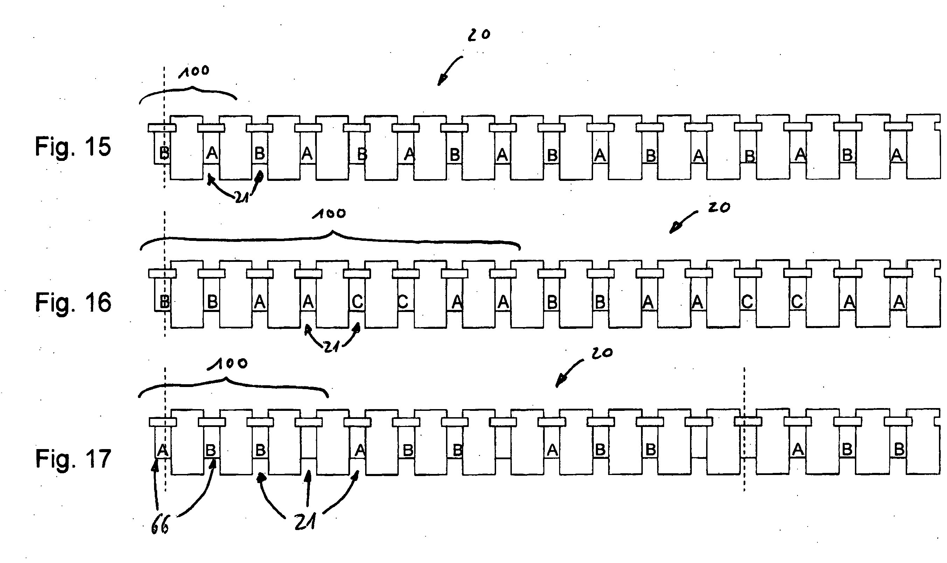

In der Figur 15 ist ein sechzehnpoliger Rotor 20 dargestellt, der das einfache Grundmuster B-A aus zwei Wirkkörpern 55 hat. Dieses Grundmuster wiederholt sich dementsprechend acht Mal am Umfang, s. a. Tabelle 1, Bestückungsvariante 24. In dieser Tabelle 1 lässt sich auch das Grundmuster 100 A-B-B-A finden, Tabelle 1, Bestückungsvariante 20.

In Figur 17 wird eine weitere Variante des Grundmusters 100 vorbestellt. Bei dieser Variante des Grundmusters spielen auch Leerstellen zwischen zwei Polen 24 und 25 ein Rolle. So ist das Grundmuster 100 aus drei Wirkkörpern 55 in der Reihenfolge der Typen A-B-B einschließlich einer Leerstelle gebildet, die den drei Wirkkörpern 55 folgt.

Wie das letzte Beispiel zeigt, ist vorgesehen, dass das Grundmuster 100 mindestens einen leeren Zwischenraum 21 zeigt.

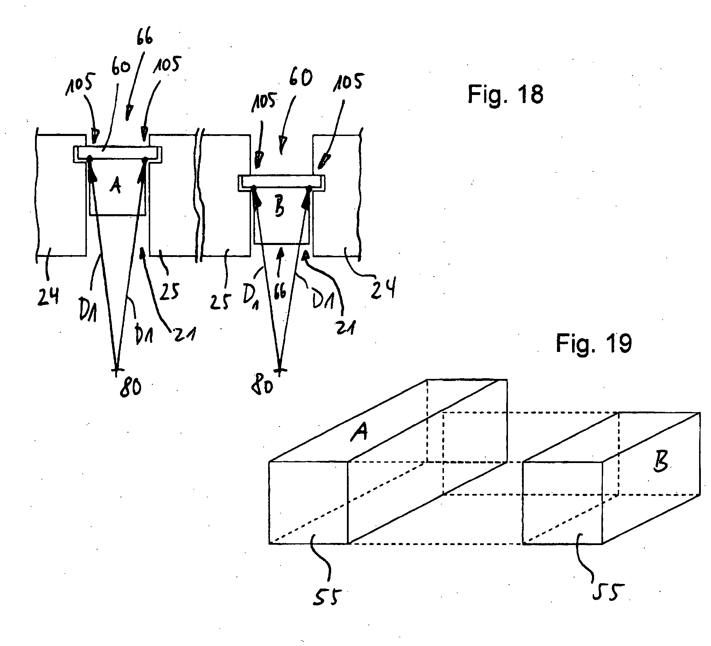

In Figur 18 ist beispielhaft die Situation zweier verschiedener Wirkkörper 55 dargestellt.

Der Wirkkörper zur Linken ist ein Wirkkörper des Typs A, der Wirkkörper 55 zur Rechten ist vom Typ B. die Darstellung ist zwar in einer Abwicklungsdarstellung gezeigt, so dass ein Radius nicht ohne Weiteres erkennbar ist. Dennoch sei hier an dieser Stelle vermerkt, dass ein jeder Wirkkörper 55 eine Stelle 105 aufweist, hier sogar zwei Stellen 105, die maximal von der Drehachse 80 entfernt ist. Aufgrund der Positionen der Wirkkörper 55 bzw. der plattenförmigen Halteelemente 60 ist deutlich, dass die maximale Entfernung D1 der Stelle 105 des einen Wirkkörpers 55 - Typ A - größer als die maximale Entfernung D2 der Stelle 105 des anderen Wirkkörpers 55 - Typ B - ist. Die Wirkkörper 55 des Typs A und des Typs B unterscheiden sich nicht nur in der Remanenz R-A bzw. R-B voneinander sondern darüber hinaus in der spezifischen elektrischen Leitfähigkeit ihrer Materialien. So sind die Wirkkörper 55 mit der geringeren spezifischen elektrischen Leitfähigkeit radial weiter außen angeordnet, während die mit der höheren spezifischen elektrischen Leitfähigkeit radial weiter innen angeordnet sind. Dies hängt mit den mit der Leitfähigkeit verbundenen Wirbelstromverlusten in den Wirkkörpern 55 ab. Je besser die spezifische elektrische Leitfähigkeit, desto höher die Wirbelstromverluste und damit die Erwärmung des entsprechenden Wirkkörpers 55. Setzt man dagegen einen Wirkkörper 55 mit höherer spezifischer elektrischer Leitfähigkeit nach radial weiter innen, so wird dieser nicht so stark erwärmt und damit das Material nicht so stark belastet. Wirkkörper 55 mit der geringeren spezifischen elektrischen Leitfähigkeit sind mit der nach radial außen gerichteten Oberfläche radial weiter außen.

Gemäß Figur 19 ist dargestellt, dass sich die räumliche Gestalt eines Wirkkörpers 55 einer Vorrichtung 66 zur Kompensation von Streufluss von räumlichen Gestalt eines Wirkkörpers 55 einer anderen sich technisch unterscheidenden Vorrichtung 66 zur Kompensation von Streufluss unterscheidet. Die Unterscheidung ist erfindungsgemäß im Volumen begründet, so dass beispielsweise die Wirkkörper 55 vom Typ B ein kleineres Volumen als die Wirkkörper 55 vom Typ A Aufweisen. Dies hat den Grund, vergleiche beispielsweise eine Anordnung wie in Figur 14 angedeutet, dass die Pole 24 bzw. 25 nicht zu stark und symmetrisch belastet werden. Wären beispielsweise beide Wirkkörper 55 von ihren Außenkonturen her gleich groß, hätten aber eine unterschiedliche Dichte, so wäre beispielsweise der Wirkkörper 55 des Typs B zwei bis zweieinhalb Mal so schwer wie ein Wirkkörper 55 des Typs A. Dies würde bedeuten, dass ein solcher Pol 24 bzw. 25 stark unsymmetrisch belastet würde. Dies führte zu einem komplexen Spannungszustand im Material und damit zu einer geringeren Belastungsfähigkeit. Zudem würde möglicher Weise ein Verdrehen eines Pols in sich stattfinden, so dass beispielsweise auf die Wirkkörper 55 des Typs B seitlich eine Presskraft wirkte. Bei zum Teil sehr spröden Materialien kann eine solche Presskraft zur Zerstörung führen. Wie bereits in der Figur 17 dargestellt, ist vorgesehen, dass in mindestens einem Zwischenraum 21 keine Vorrichtung 66 zur Kompensation von Streufluss angeordnet ist. Es ist vorgesehen, dass die Wirkkörper 55 technisch unterschiedlicher Vorrichtungen 66 zur Kompensation von Streufluss das gleiche Gewicht aufweisen. Insbesondere ist vorgesehen, dass der Wirkkörper 55 mit der Remanenz R-A ein so genannter Ferritmagnet ist und der Wirkkörper 55 mit der Remanenz R-B ein Seltenerdmagnet ist. Ein Wirkkörper 55 mit der Remanenz R-C kann beispielsweise ein Seltenerdmagnet sein.

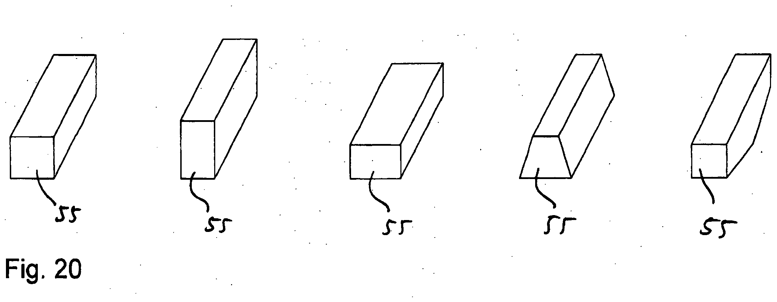

In Figur 20 sind fünf verschiedene Ausführungsbeispiele von Wirkkörpern 55 dargestellt. Diese Wirkkörper können beispielsweise quaderförmig sein und dabei einen quadratischen Querschnitt aufweisen oder quaderförmig sein und dabei einen rechteckigen Querschnitt aufweisen, trapezförmig gestaltet sein oder eine Quaderform aufweisen, an die einstückig ein Dreieckprisma angeformt ist.

Als Materialien für die Wirkkörper 55 kommen beispielsweise Permanentmagnete aus Ferriten (Remanenz zwischen 0,2 bis 0,48 Tesla), Aluminium-Nickel-Kobalt (Remanenz zwischen 0,5 Tesla bis 1,3 Tesla), Samarium-Kobalt (Remanenz zwischen 0,8 Tesla bis 1,2 Tesla), Neodym-Eisen-Bor (Remanenz zwischen 0,42 Tesla bis 1,51 Tesla) in Frage. Die genannten Inhaltsstoffe für das jeweilige Magnetmaterial schließen nicht aus, dass in diesen Materialien bzw. deren Körpern nicht noch andere Stoffe verarbeitet sein können. Die eben gegebenen Bezeichnungen sind übliche Bezeichnungen für solche Permanentmagnete.

In einer Kombination von Wirkkörpern 55 des Typs A und B kann gemäß den nachfolgenden nicht vollständigen Beispielen folgende Realisierung gegeben sein. Es gilt dabei die Bedingung, dass die Remanenz des Wirkkörpers 55 des Typs A kleiner als die Remanenz des Wirkkörpers 55 des Typs B, welche wiederum kleiner als die Remanenz eines ggf. mitkombinierten Wirkkörpers des Typs C ist:
- Beispiel a): Typ A aus Ferriten, Typ B aus Aluminium-Nickel-Kobalt
- Beispiel b): Typ A aus Ferriten, Typ B aus Neodym-Eisen-Bor
- Beispiel c): Typ A aus Ferriten, Typ B aus Samarium-Kobalt
- Beispiel d): Typ A aus Aluminium-Nickel-Kobalt, Typ B aus Neodym-Eisen-Bor,
- Beispiel e): Typ A aus Aluminium-Nickel-Kobalt, Typ B aus Samarium-Kobalt,
- Beispiel f): Typ A aus Neodym-Eisen-Bor, Typ B aus Samarium-Kobalt,
- Beispiel g): Typ A aus Samarium-Kobalt, Typ B aus Neodym-Eisen-Bor,
- Beispiel h): Typ A aus Ferriten, Typ B aus Aluminium-Nickel-Kobalt, Typ C aus Neodym-Eisen-Bor,
- Beispiel i): Typ A aus Ferriten, Typ B aus Neodym-Eisen-Bor, Typ C aus Samarium-Kobalt,
- Beispiel j): Typ A aus Aluminium-Nickel-Kobalt, Typ B aus Neodym-Eisen-Bor, Typ C aus Samarium-Kobalt,
- Beispiel k): Typ A aus Aluminium-Nickel-Kobalt, Typ B aus Samarium-Kobalt, Typ C aus Neodym-Eisen-Bor.

Hinsichtlich der Anordnung der Grundmuster 100 sind diese sowohl für rechtsdrehende als auch für linksdrehende Generatoren bzw. elektrische Maschinen vorgesehen. Des Weiteren ist die Anordnung der Grundmuster 100 unabhängig von der Lage des Antriebselements (bspw. Riemenscheibe), d. h. an welchem Ende der Rotorwelle dieses angeordnet ist.

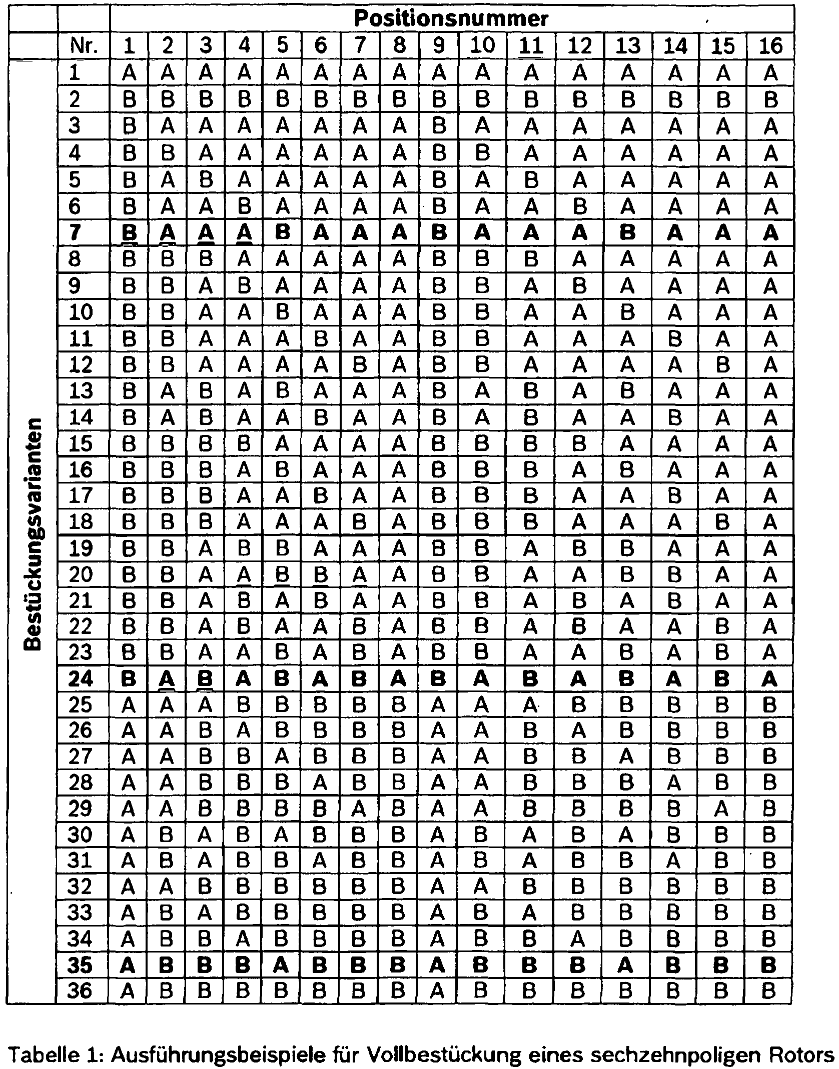

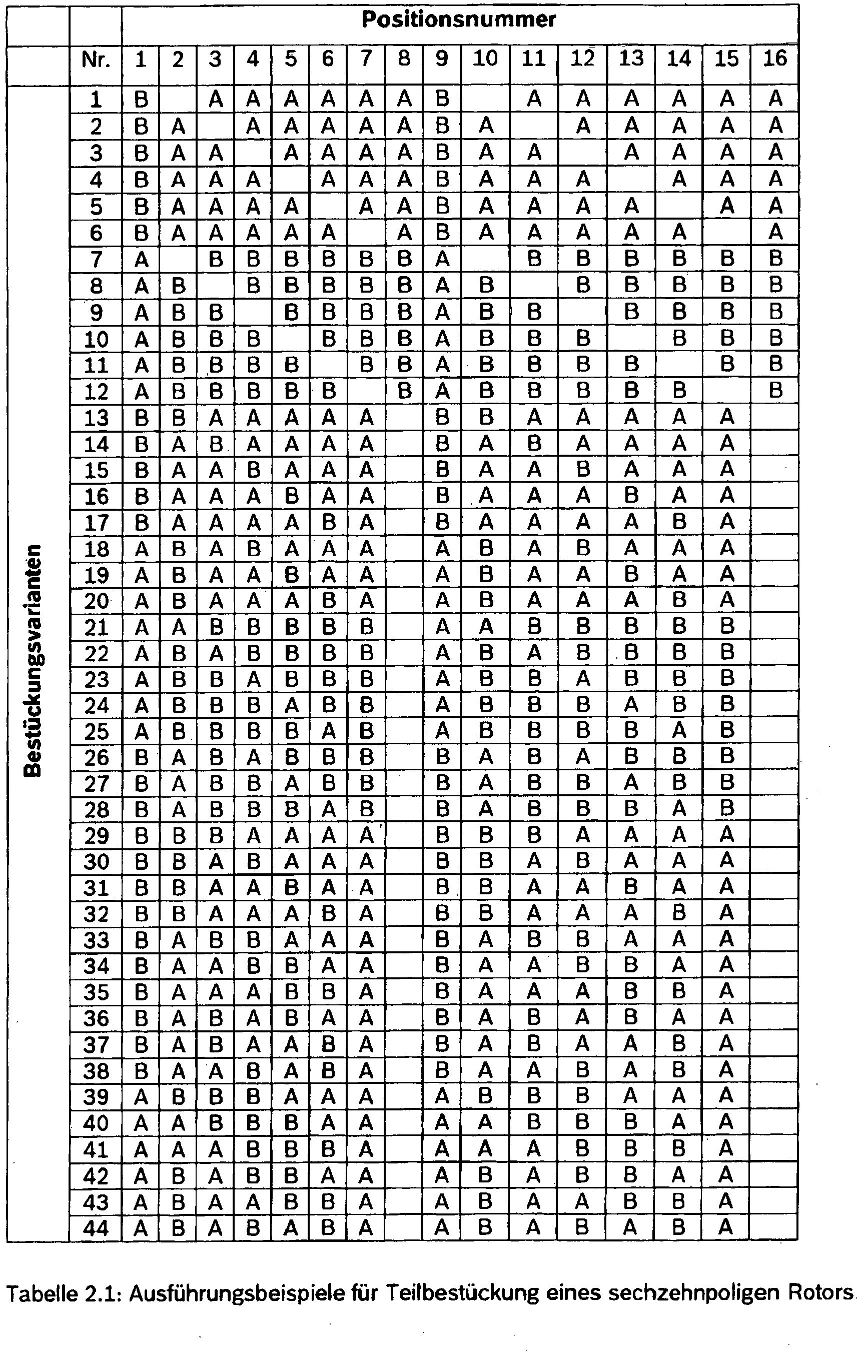

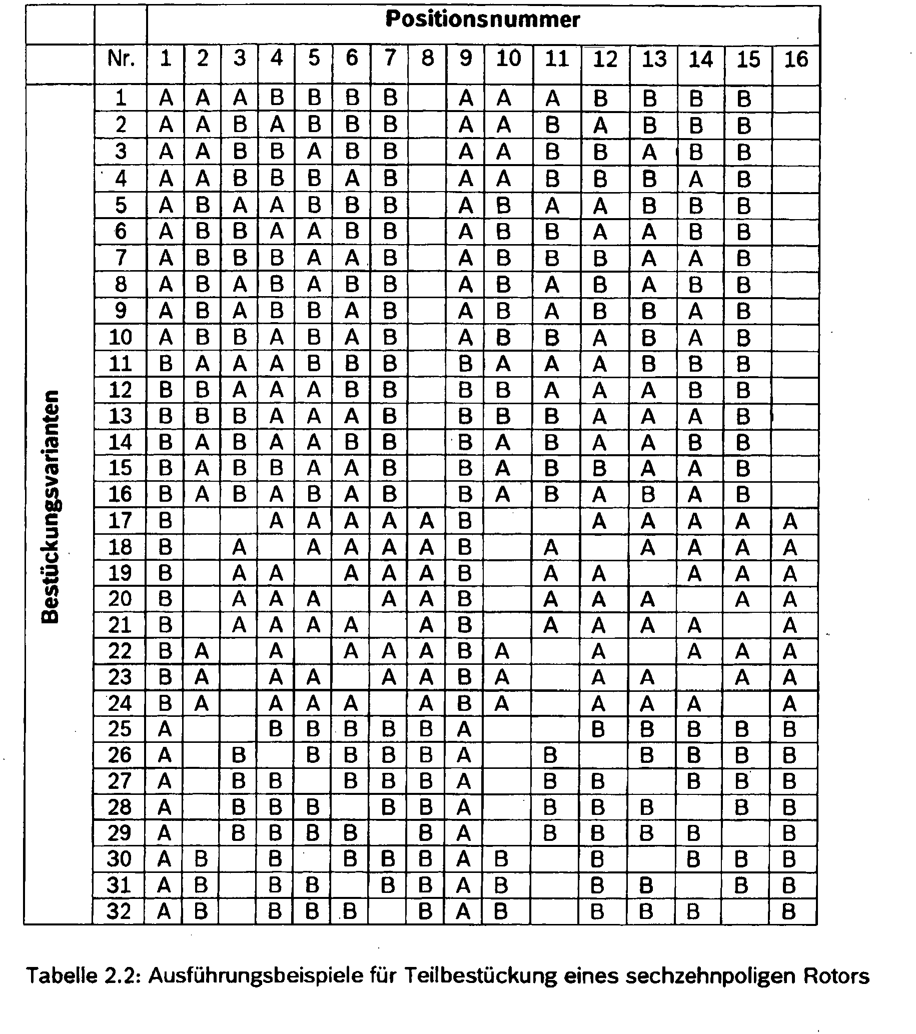

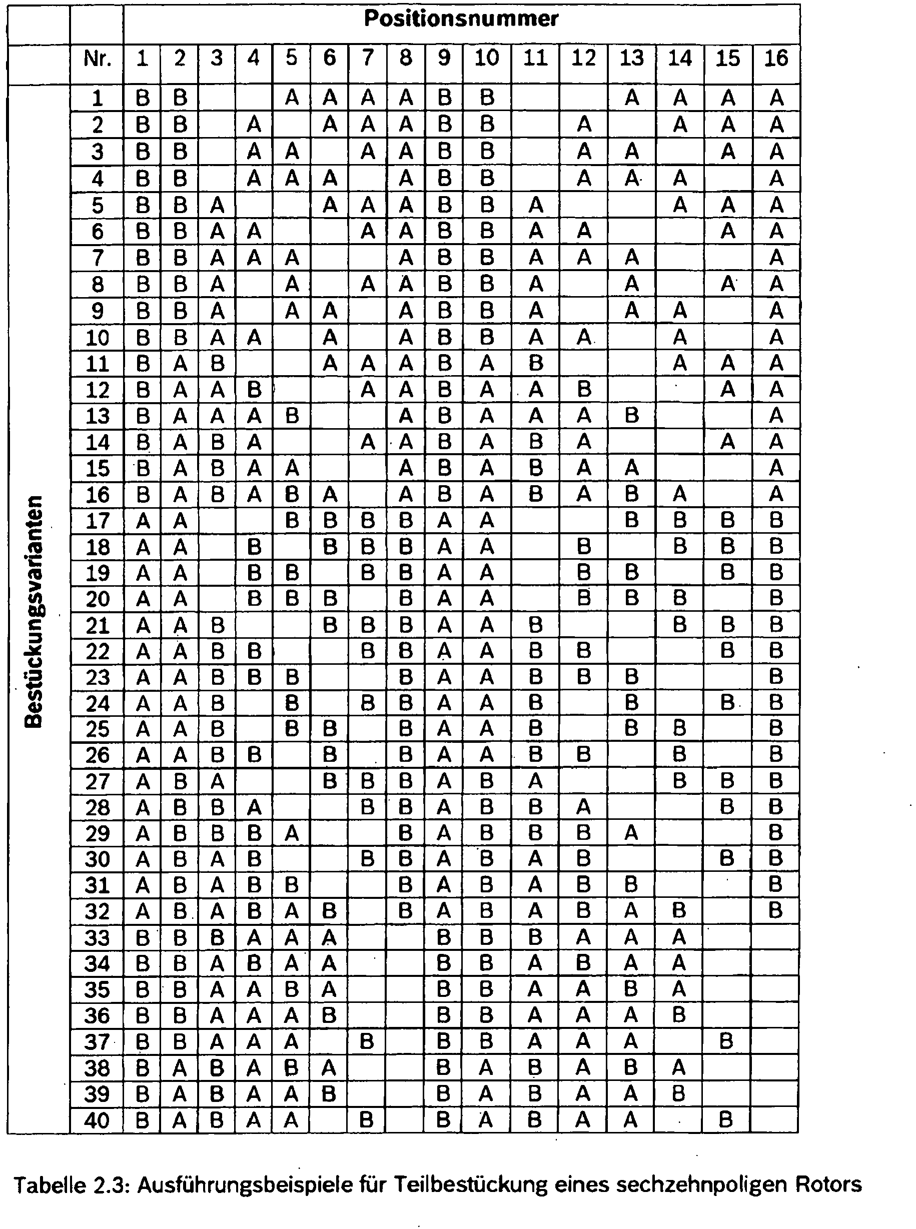

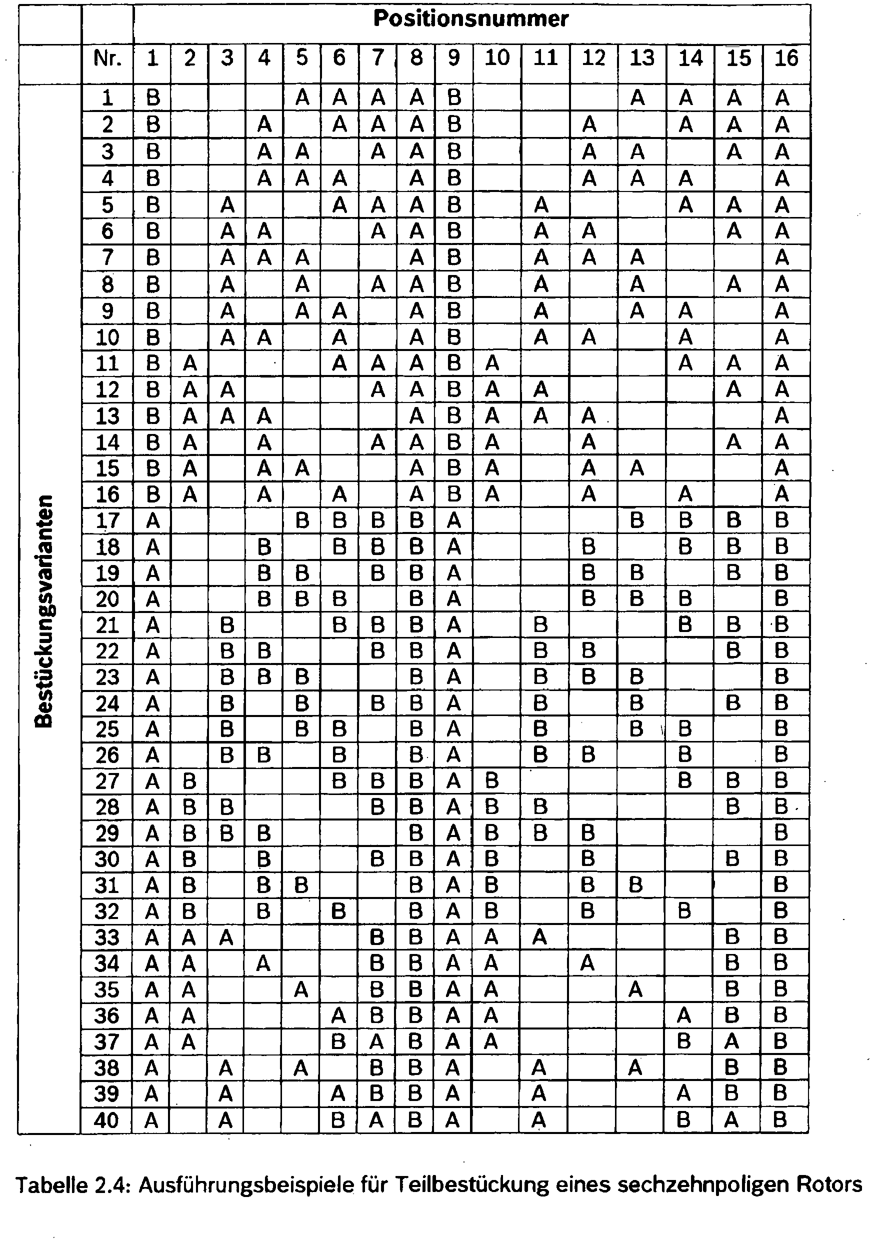

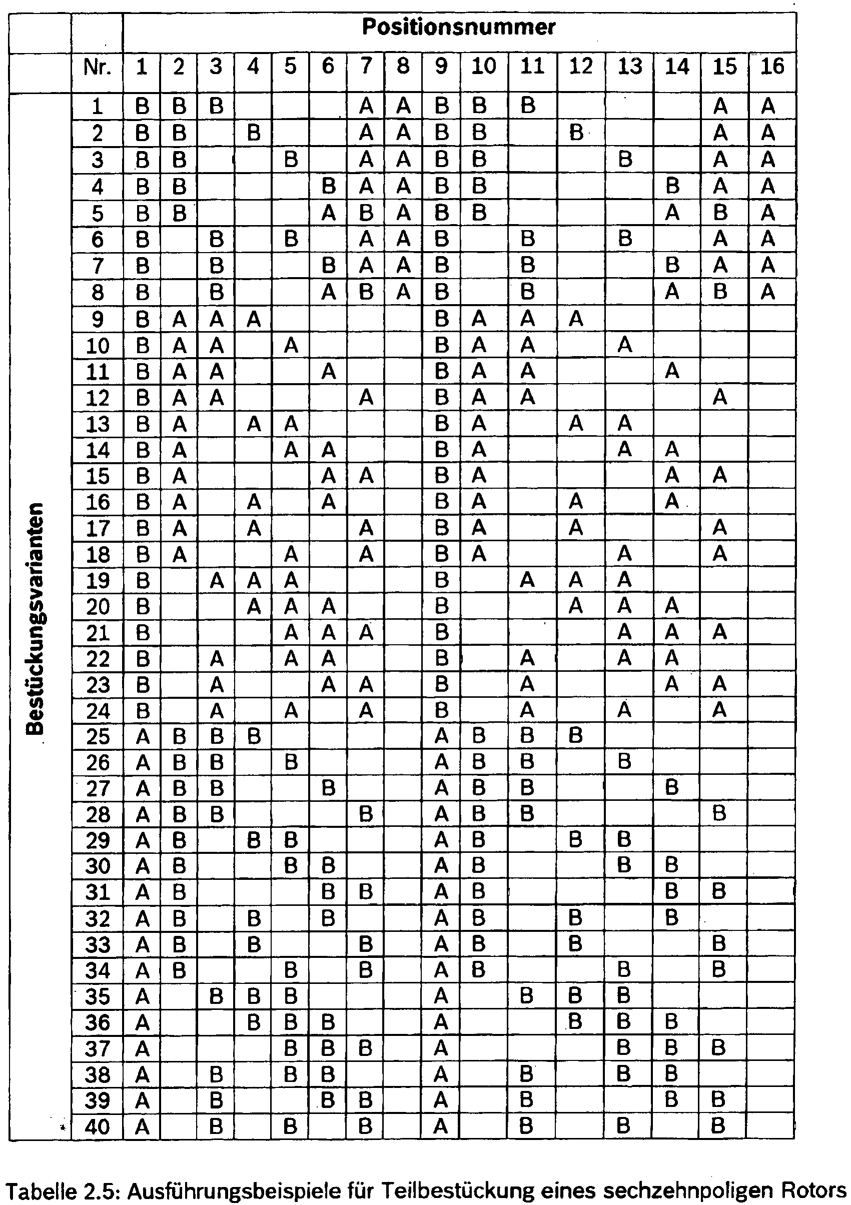

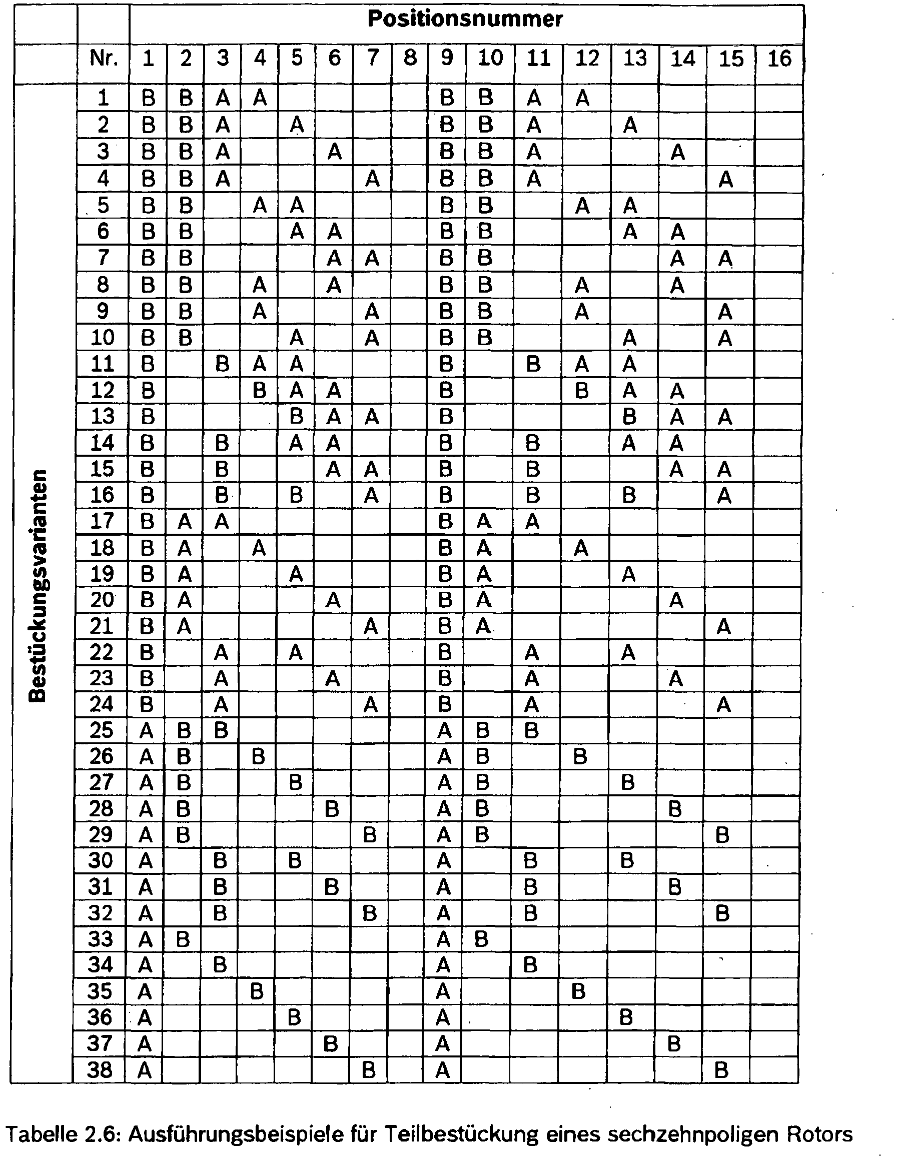

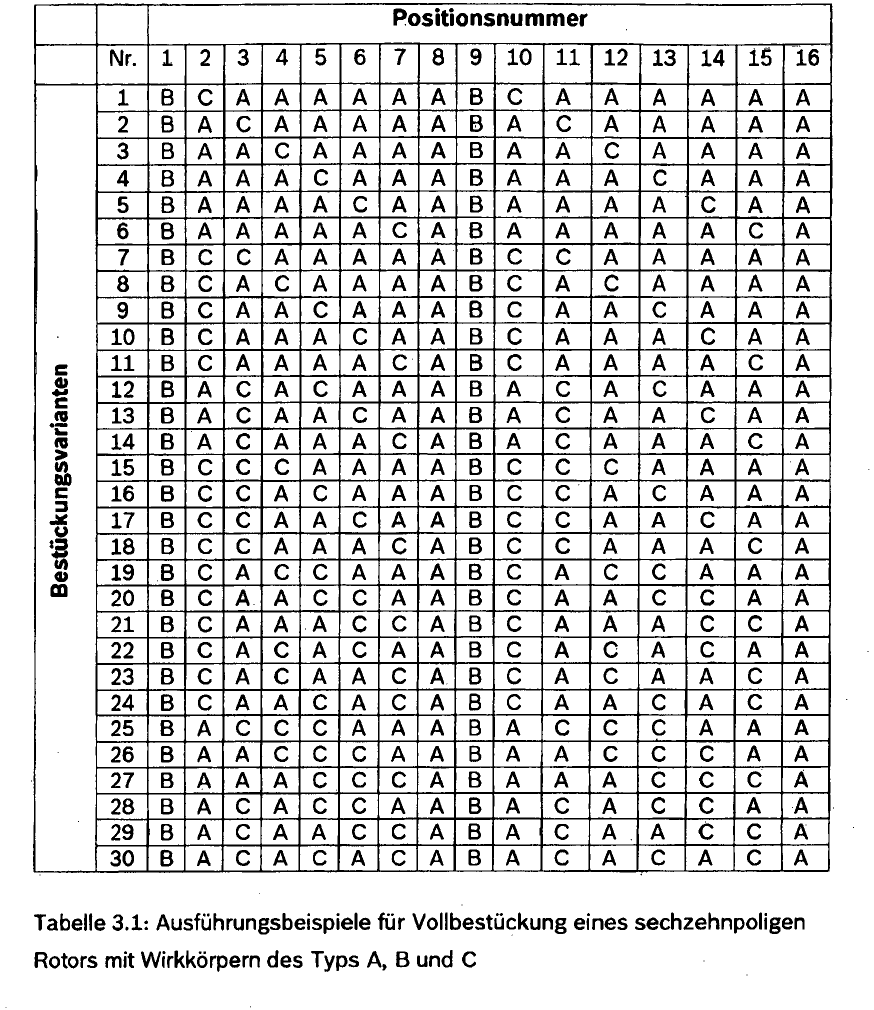

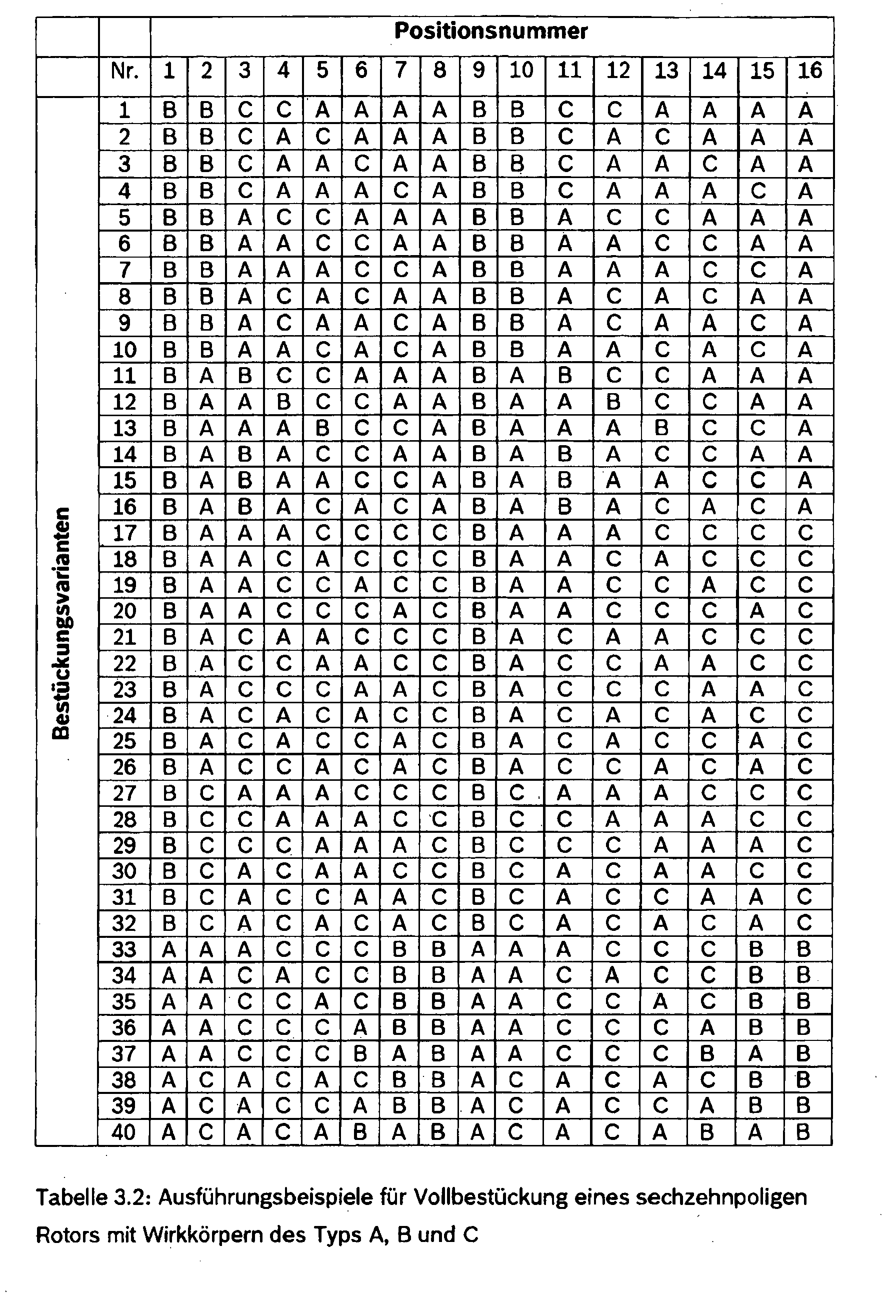

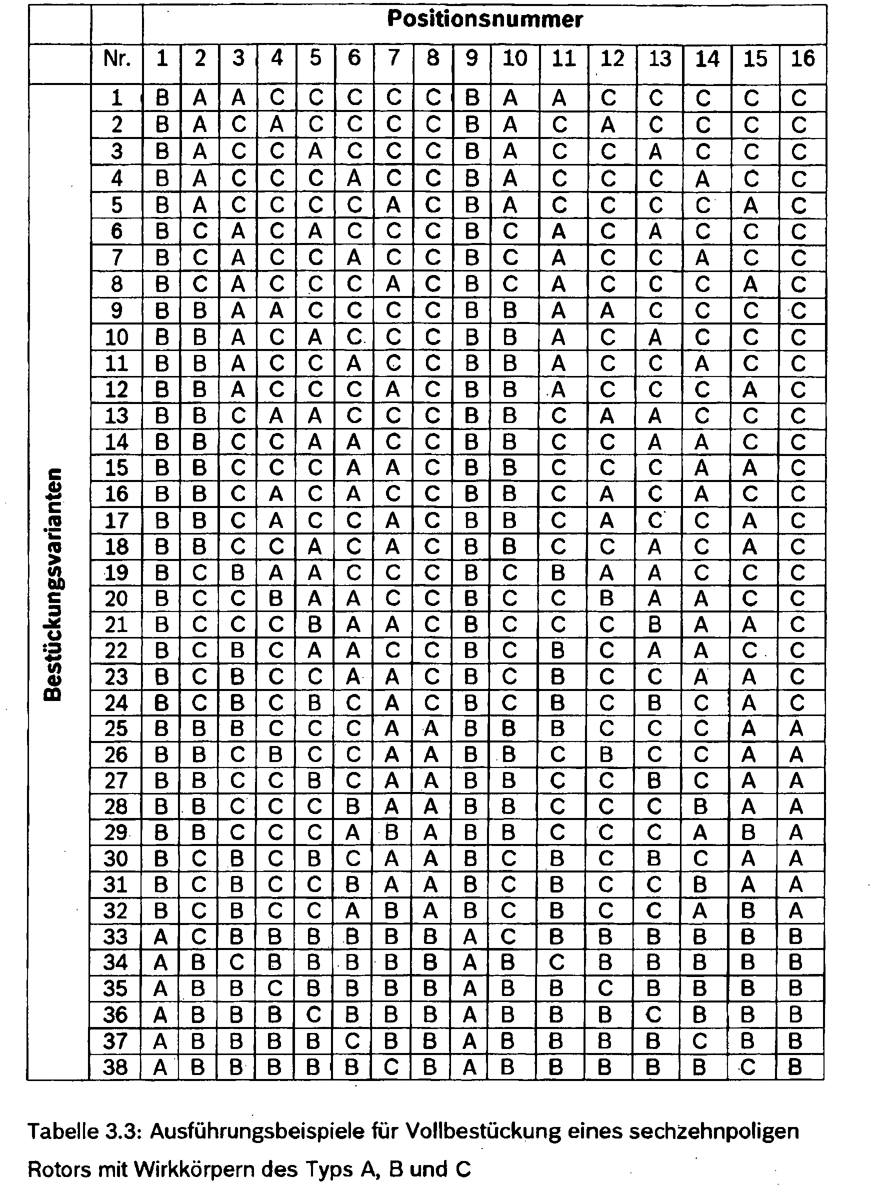

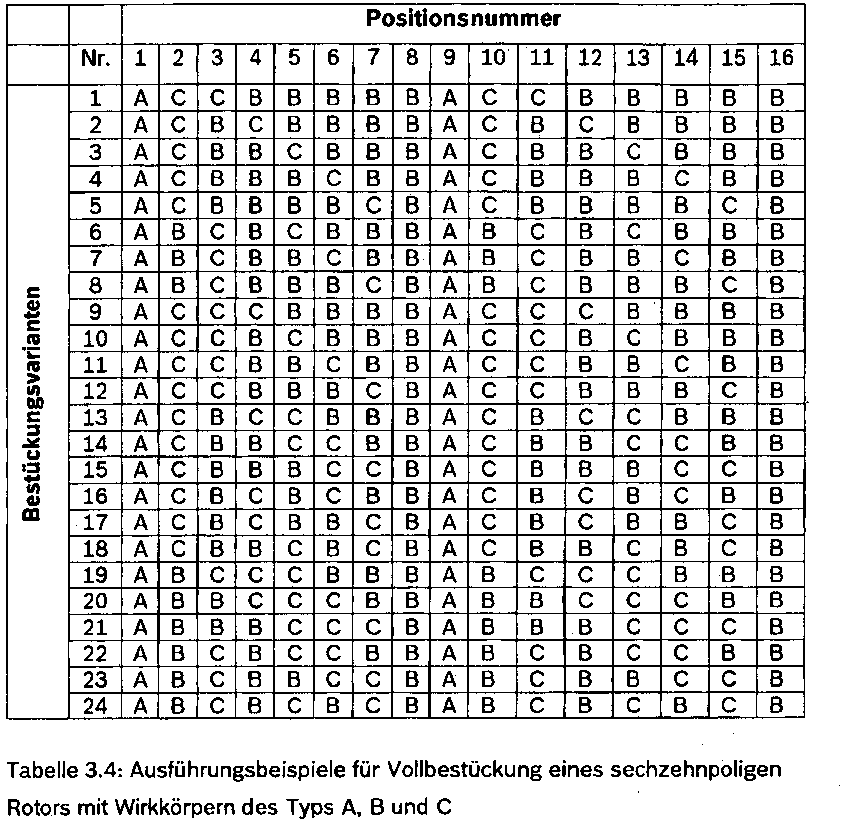

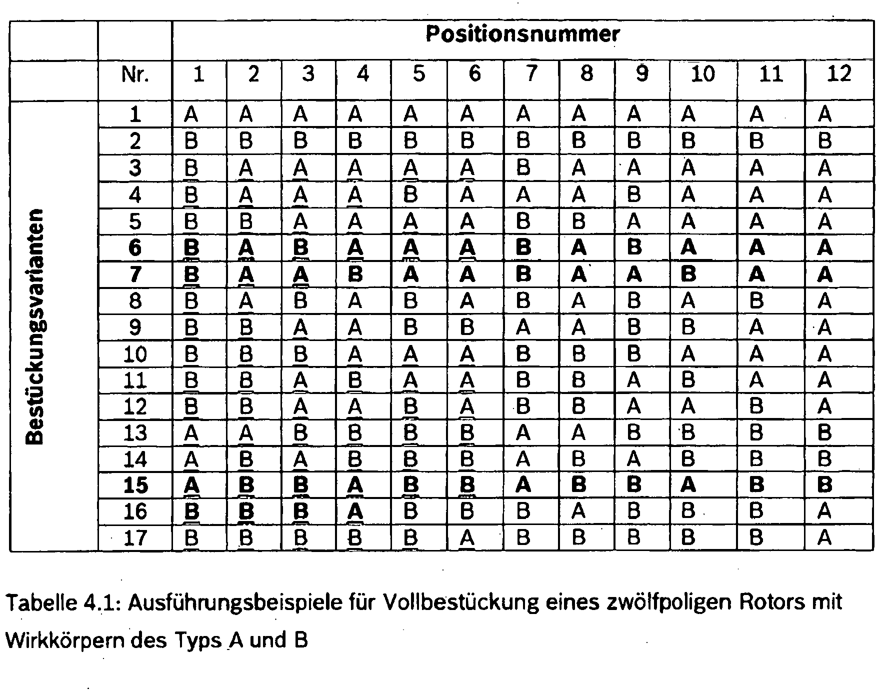

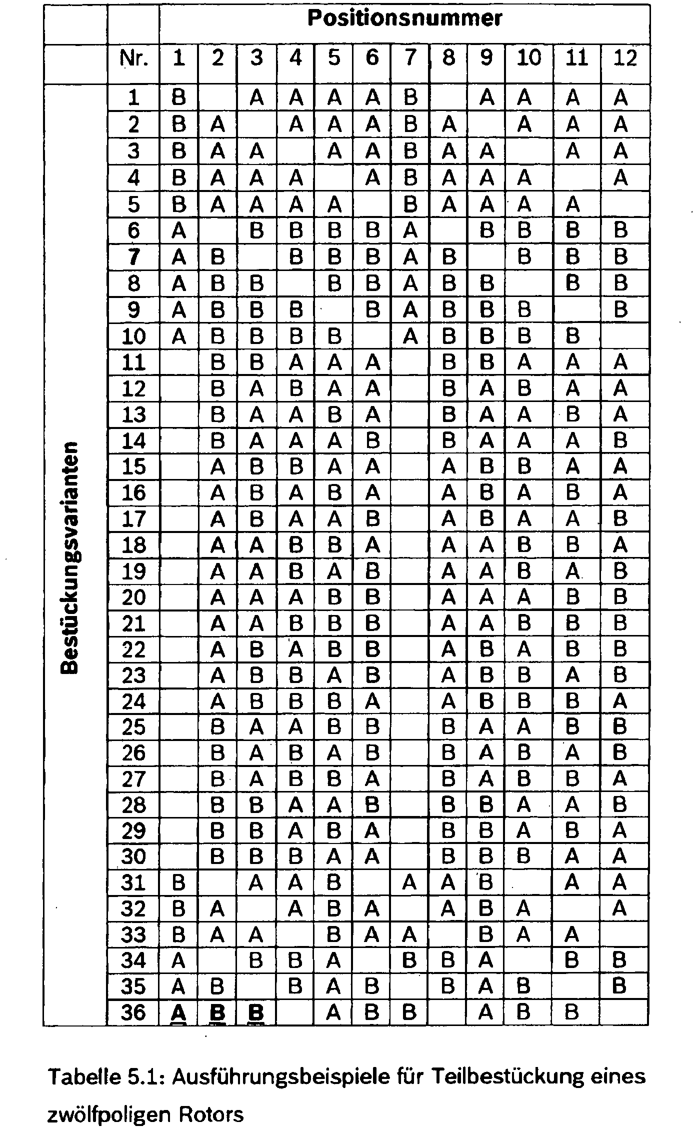

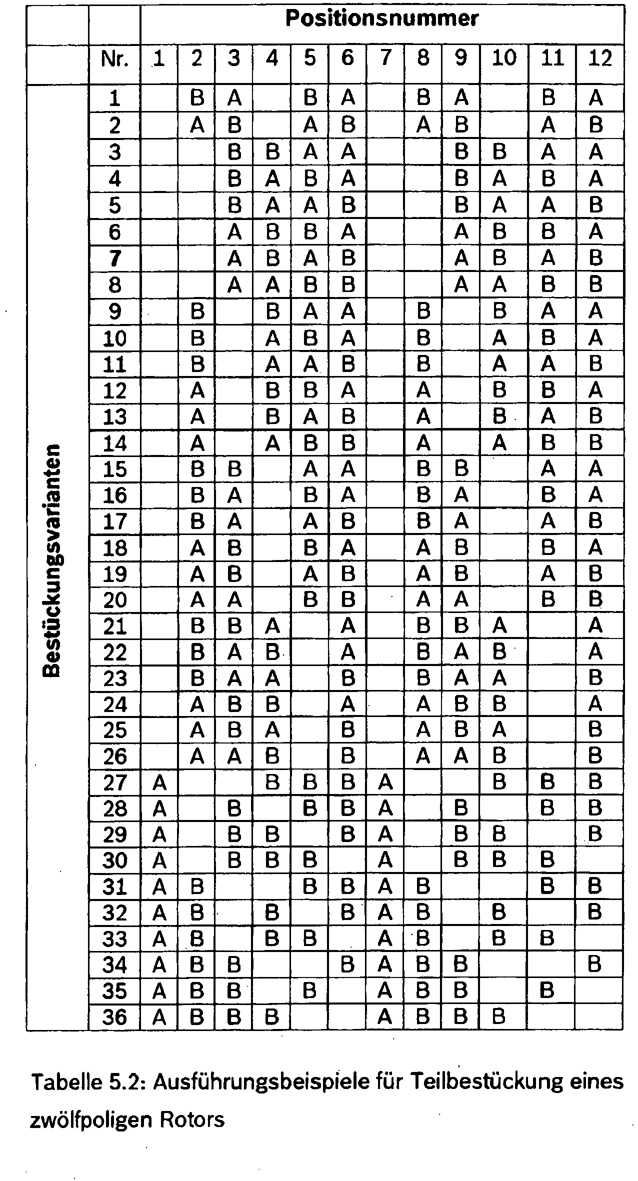

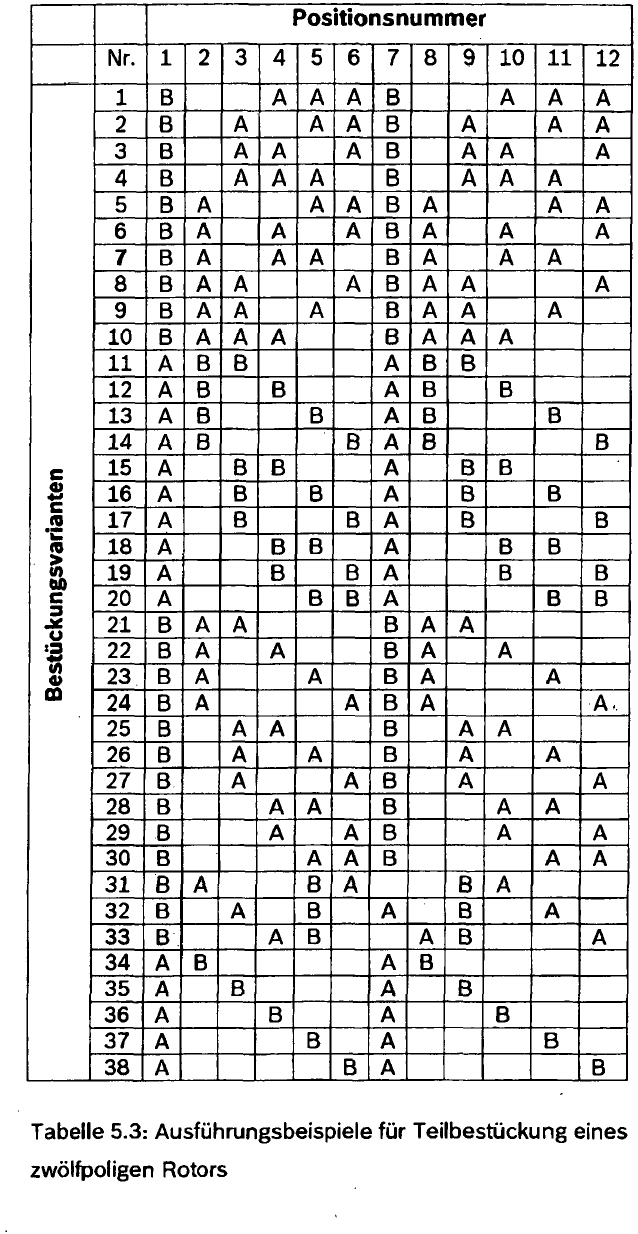

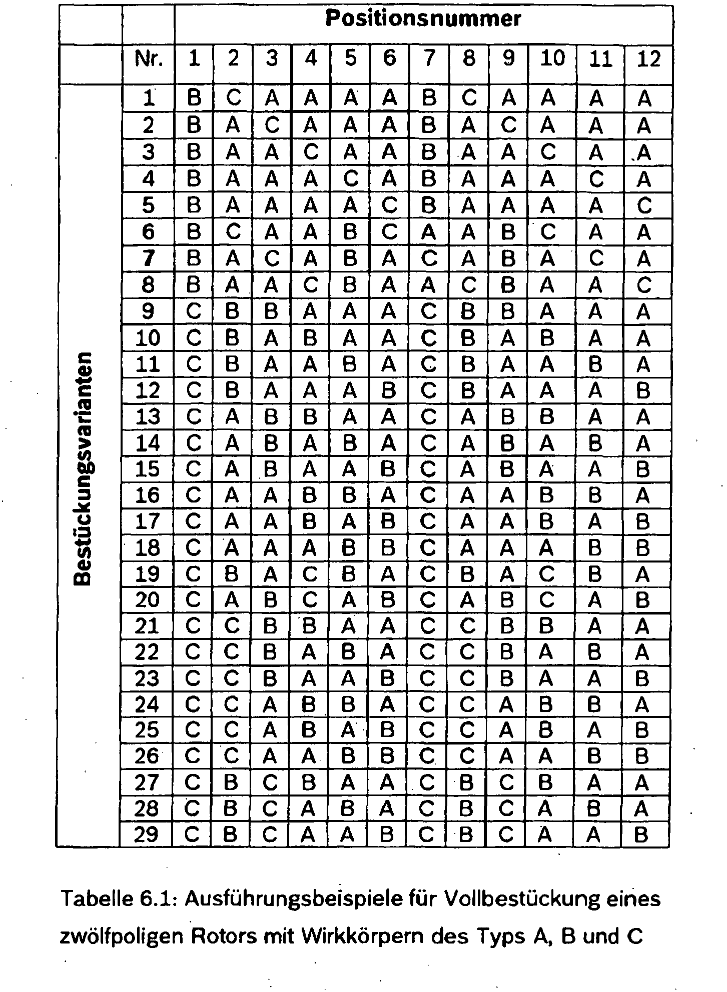

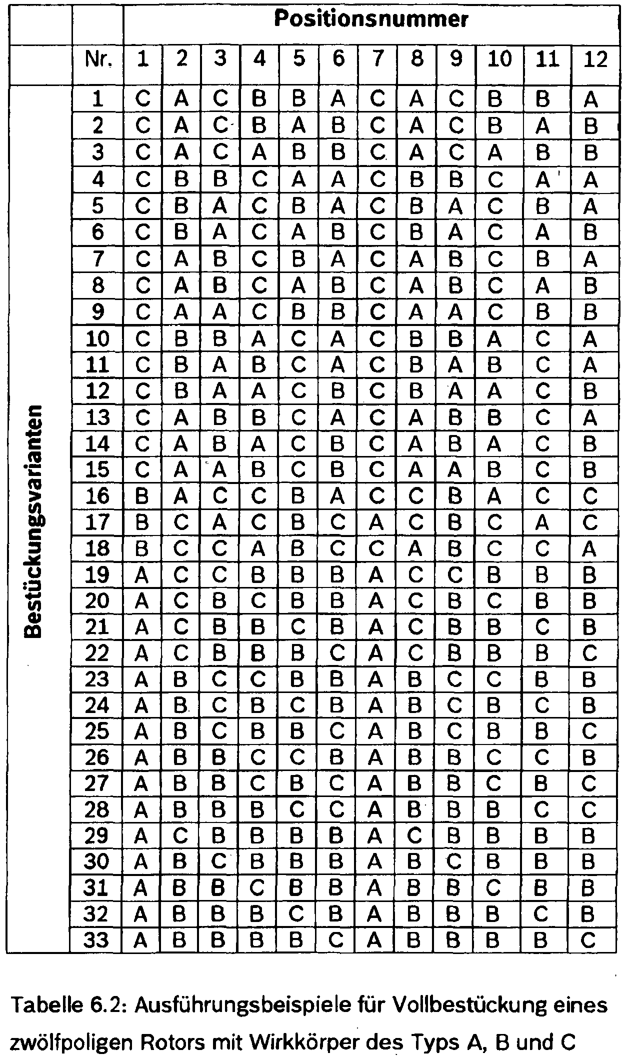

## Patentansprüche

1. Elektrische Maschine (10), insbesondere Wechselstromgenerator, mit einem Stator (16), der eine elektromagnetisch wirksame Oberfläche (19) aufweist, mit einem Rotor (20), der ebenfalls eine elektromagnetisch wirksame Oberfläche (26) aufweist, wobei die elektromagnetisch wirksame Oberfläche (26) des Rotors (20) der elektromagnetisch wirksamen Oberfläche (19) des Stators (16) zur Wechselwirkung gegenübersteht, wobei der Rotor (20) mehrere verschieden polbare Pole (24, 25) hat und zwischen benachbarten, verschieden polbaren Polen (24, 25) Zwischenräume (21) zur Poltrennung sind, wobei in zumindest zwei Zwischenräumen (21) je eine Vorrichtung (66) zur Kompensation von Streufluss mit einem Wirkkörper (55) angeordnet ist, wobei in einem Zwischenraum (21) eine Vorrichtung (66) zur Kompensation von Streufluss mit einem Wirkkörper (55) und in einem anderen Zwischenraum (21) eine Vorrichtung (66) zur Kompensation von Streufluss mit einem anders aufgebauten Wirkkörper (55) angeordnet ist, wobei die Wirkkörper (55) der unterschiedlichen Vorrichtungen (66) unterschiedliche Remanenzen (R-A, R-B, R-C) aufweisen
**dadurch gekennzeichnet, dass** sich die räumliche Gestalt eines Wirkkörpers (55) einer Vorrichtung (66) zur Kompensation von Streufluss von der räumlichen Gestalt eines Wirkkörpers (55) einer anderen sich technisch unterscheidenden Vorrichtung (66) zur Kompensation von Streufluss unterscheidet, wobei die Unterscheidung im Volumen begründet ist, und wobei derjenige Wirkkörper mit einer höheren Dichte ein kleineres Volumen als der andere Wirkkörper hat.

2. Elektrische Maschine nach Anspruch 1, **dadurch gekennzeichnet, dass** die eine Vorrichtung (66) zur Kompensation von Streufluss einen Wirkkörper (55) mit einer Remanenz (R-A) und die andere Vorrichtung (66) zur Kompensation von Streufluss einen Wirkkörper (55) mit einer Remanenz (R-B) aufweist, wobei die Remanenz (R-B) größer als die Remanenz (R-A) ist.

3. Elektrische Maschine nach Anspruch 2, **dadurch gekennzeichnet, dass** eine weitere Vorrichtung (66) zur Kompensation von Streufluss einen Wirkkörper (55) mit einer Remanenz (R-C) aufweist, wobei die Remanenz (R-C) größer als die Remanenz (R-B) ist.

4. Elektrische Maschine nach Anspruch 2 oder 3, **dadurch gekennzeichnet, dass** die Wirkkörper (55) eine Remanenz (R-A, R-B, R-C) aufweisen, die zwischen 0,2T und 1,51T ist.

5. Elektrische Maschine nach einem der vorstehenden Ansprüche, **dadurch gekennzeichnet, dass** die Vorrichtungen (66) zur Kompensation von Streufluss so in dem Rotor (20) angeordnet sind, dass ein gemeinsamer Schwerpunkt aller Vorrichtungen (66) in Summe a) in der Drehachse (80) oder b) in einer Rotorwelle (27) liegt.

6. Elektrische Maschine nach einem der vorstehenden Ansprüche, **dadurch gekennzeichnet, dass** die Anordnung der Vorrichtungen (66) zur Kompensation von Streufluss im Rotor (20) symmetrisch ist, insbesondere punktsymmetrisch oder spiegelsymmetrisch.

7. Elektrische Maschine nach einem der vorstehenden Ansprüche, **dadurch gekennzeichnet, dass** die technisch unterschiedlichen Vorrichtungen (66) zur Kompensation von Streufluss im Rotor (20) als ein Grundmuster (100) angeordnet sind und sich dieses Grundmuster (100) bei
a) vier Polen (24, 25) im Rotor zwei Mal,
b) sechs Polen (24, 25) im Rotor zwei oder drei Mal,
c) acht Polen (24, 25) im Rotor zwei oder vier Mal,
d) zehn Polen (24, 25) im Rotor zwei oder fünf Mal,
e) zwölf Polen (24, 25) im Rotor zwei oder drei oder vier oder sechs Mal,
f) vierzehn Polen (24, 25) im Rotor zwei oder sieben Mal,
g) sechzehn Polen (24, 25) im Rotor zwei oder vier oder acht Mal unmittelbar aufeinander folgend am Umfang des Rotors (20) wiederholt.

8. Elektrische Maschine nach Anspruch 6 oder den Fällen b) bis g) des Anspruchs 7, **dadurch gekennzeichnet, dass** das Grundmuster (100) mindestens einen leeren Zwischenraum (21) aufweist.

9. Elektrische Maschine nach einem der vorstehenden Ansprüche, **dadurch gekennzeichnet, dass** der Wirkkörper (55) einer Vorrichtung (66) zur Kompensation von Streufluss eine Stelle (105) aufweist, die maximal von der Drehachse (80) entfernt ist und der Wirkkörper (55) einer anderen technisch unterschiedlichen Vorrichtung (66) zur Kompensation von Streufluss eine Stelle (105) aufweist, die ebenfalls maximal von der Drehachse (80) entfernt ist, wobei eine maximale Entfernung (D1) der Stelle (105) des einen Wirkkörpers (55) größer als die maximale Entfernung (D2) der Stelle (105) des anderen Wirkkörpers (55) ist.

10. Elektrische Maschine nach Anspruch 9, **dadurch gekennzeichnet, dass** der Wirckörper (55) der Vorrichtung (66) zur Kompensation von Streufluss (55), dessen maximal von der Drehachse (80) entfernte Stelle (105) weiter von der Drehachse (80) entfernt ist als eine maximal von der Drehachse (80) entfernte Stelle (105) eines anderen Wirkkörpers (55) einer anderen Vorrichtung (66) zur Kompensation von Streufluss, ein Magnetmaterial aufweist, das eine geringere spezifische elektrische Leitfähigkeit hat als das Magnetmaterial des anderen Wirkkörpers.

11. Elektrische Maschine nach einem der vorstehenden Ansprüche, **dadurch gekennzeichnet, dass**, dass in mindestens einem Zwischenraum (21) keine Vorrichtung (66) zur Kompensation von Streufluss angeordnet ist.

12. Elektrische Maschine nach einem der vorstehenden Ansprüche, **dadurch gekennzeichnet, dass** die Wirkkörper (55) technisch unterschiedlicher Vorrichtungen (66) zur Kompensation von Streufluss das gleiche Gewicht aufweisen.

13. Elektrische Maschine nach einem der vorstehenden Ansprüche, **dadurch gekennzeichnet, dass** der Wirkkörper (55) mit der Remanenz (R-A) ein Ferritmagnet ist und der Wirkkörper (55) mit der Remanenz (R-B) ein Seltenerdmagnet ist.

14. Elektrische Maschine nach Anspruch einem der Ansprüche 3 oder 4, **dadurch gekennzeichnet, dass** der Wirkkörper (55) mit der Remanenz (R-C) ein Seltenerdmagnet ist.

## Claims

1. Electrical machine (10), in particular AC generator, comprising a stator (16) which has an electromagnetically active surface (19), comprising a rotor (20) which likewise has an electromagnetically active surface (26), wherein the electromagnetically active surface (26) of the rotor (20) is situated opposite the electromagnetically active surface (19) of the stator (16) for interaction purposes, wherein the rotor (20) has a plurality of poles (24, 25) which which can be differently polarized and there are intermediate spaces (21) for pole separation between adjacent poles (24, 25) which can be differently polarized, wherein a respective apparatus (66) for compensating for stray flux with an active body (55) is arranged in at least two intermediate spaces (21), wherein an apparatus (66) for compensating for stray flux with an active body (55) is arranged in one intermediate space (21), and an apparatus (66) for compensating for stray flux with an active body (55) of different construction is arranged in another intermediate space (21), wherein the active bodies (55) of the different apparatuses (66) have different remanences (R-A, R-B, R-C), **characterized in that** the physical design of an active body (55) of an apparatus (66) for compensating for stray flux differs from the physical design of an active body (55) of another technically different apparatus (66) for compensating for stray flux, wherein the distinction is due to volume, and wherein the higher density active body has a smaller volume than the other active body.

2. Electrical machine (10) according to Claim 1, **characterized in that** one apparatus (66) for compensating for stray flux has an active body (55) with a remanence (R-A), and the other apparatus (66) for compensating for stray flux has an active body (55) with a remanence (R-B), wherein the remanence (R-B) is greater than the remanence (R-A).

3. Electrical machine (10) according to Claim 2, **characterized in that** a further apparatus (66) for compensating for stray flux has an active body (55) with a remanence (R-C), wherein the remanence (R-C) is greater than the remanence (R-B).

4. Electrical machine (10) according to Claim 2 or 3, **characterized in that** the active bodies (55) have a remanence (R-A, R-B, R-C) which is between 0.2 T and 1.51 T.

5. Electrical machine (10) according to one of the preceding claims, **characterized in that** the apparatuses (66) for compensating for stray flux are arranged in the rotor (20) such that a common centre of gravity of all of the apparatuses (66) on the whole lies a) in the rotation axis (80) or b) in a rotor shaft (27).

6. Electrical machine (10) according to one of the preceding claims, **characterized in that** the arrangement of the apparatuses (66) for compensating for stray flux in the rotor (20) is symmetrical, in particular point-symmetrical or mirror-symmetrical.

7. Electrical machine (10) according to one of the preceding claims, **characterized in that** the technically different apparatuses (66) for compensating for stray flux in the rotor (20) are arranged as a basic pattern (100) and this basic pattern (100) is repeated
a) twice when there are four poles (24, 25) in the rotor (20),
b) twice or three times when there are six poles (24, 25) in the rotor (20),
c) twice or four times when there are eight poles (24, 25) in the rotor (20),
d) twice or five times when there are ten poles (24, 25) in the rotor (20),
e) twice or three times or four times or six times when there are twelve poles (24, 25) in the rotor (20),
f) twice or seven times when there are fourteen poles (24, 25) in the rotor (20),
g) twice or four times or eight times when there are sixteen poles (24, 25) in the rotor (20)

8. Electrical machine according to Claim 6 or in situations b) to g) of Claim 7, **characterized in that** the basic pattern (100) has at least one empty intermediate space (21).

9. Electrical machine (10) according to one of the preceding claims, **characterized in that** the active body (55) of an apparatus (66) for compensating for stray flux has a point (105) which is at a maximum distance from the rotation axis (80), and the active body (55) of another technically different apparatus (66) for compensating for stray flux has a point (105) which is likewise at a maximum distance from the rotation axis (80), wherein a maximum distance (D1) of the point (105) of one active body (55) is greater than the maximum distance (D2) of the point (105) of the other active body (55).

10. Electrical machine (10) according to Claim 9, **characterized in that** the active body (55) of the apparatus (66) for compensating for stray flux (55), of which active body the point (105) which is at a maximum distance from the rotation axis (80) is further away from the rotation axis (80) than a point (105) of a another active body (55) of another apparatus (66) for compensating for stray flux, which point is at a maximum distance from the rotation axis (80), has a magnetic material which has a lower specific electrical conductivity than the magnetic material of the other active body.

11. Electrical machine (10) according to one of the preceding claims, **characterized in that** there is no apparatus (66) for compensating stray flux arranged in at least one intermediate space (21).

12. Electrical machine (10) according to one of the preceding claims, **characterized in that** the active bodies (55) of technically different apparatuses (66) for compensating for stray flux have the same weight.

13. Electrical machine (10) according to one of the preceding claims, **characterized in that** the active body (55) with the remanence (R-A) is a ferrite magnet and the active body (55) with the remanence (R-B) is a rare-earth magnet.

14. Electrical machine (10) according to one of Claims 3 and 4, **characterized in that** the active body (55) with the remanence (R-C) is a rare-earth magnet.

## Revendications

1. Machine électrique (10), notamment générateur de courant alternatif, comprenant un stator (16) qui possède une surface (19) active du point de vue électromagnétique, comprenant un rotor (20) qui possède également une surface (26) active du point de vue électromagnétique, la surface (26) active du point de vue électromagnétique du rotor (20) se trouvant à l'opposé de la surface (19) active du point de vue électromagnétique du stator (16) en vue d'une interaction, le rotor (20) comprenant plusieurs pôles (24, 25) pouvant être polarisés différemment et des espaces intermédiaires (21) servant à la séparation des pôles étant présents entre des pôles (24, 25) voisins pouvant être polarisés différemment, un dispositif (66) servant à la compensation du flux de dispersion avec un corps actif (55) étant respectivement disposé dans au moins deux espaces intermédiaires (21), un dispositif (66) servant à la compensation du flux de dispersion avec un corps actif (55) étant disposé dans un espace intermédiaire (21) et un dispositif (66) servant à la compensation du flux de dispersion avec un autre corps actif (55) étant disposé dans un autre espace intermédiaire (21), les corps actifs (55) des différents dispositifs (66) possédant des rémanences (R-A, R-B, R-C) différentes,
**caractérisée en ce que** la structure dans l'espace d'un corps actif (55) d'un dispositif (66) servant à la composition du flux de dispersion se différencie de la structure dans l'espace d'un corps actif (55) d'un autre dispositif (66) techniquement différent servant à la compensation du flux de dispersion, la différence étant justifiée par le volume, et le corps actif présentant une densité plus élevée ayant un volume inférieur à celui de l'autre corps actif.

2. Machine électrique selon la revendication 1, **caractérisée en ce que** l'un des dispositifs (66) servant à la compensation du flux de dispersion possède un corps actif (55) ayant une rémanence (R-A) et l'autre dispositif (66) servant à la compensation du flux de dispersion possède un corps actif (55) ayant une rémanence (R-B), la rémanence (R-B) étant supérieure à la rémanence (R-A).

3. Machine électrique selon la revendication 2, **caractérisée en ce qu'**un dispositif (66) supplémentaire servant à la compensation du flux de dispersion possède un corps actif (55) ayant une rémanence (R-C), la rémanence (R-C) étant supérieure à la rémanence (R-B).

4. Machine électrique selon la revendication 2 ou 3, **caractérisée en ce que** les corps actifs (55) possèdent des rémanences (R-A, R-B, R-C) qui sont comprises entre 0,2 T et 1,51 T.

5. Machine électrique selon l'une des revendications précédentes, **caractérisée en ce que** les dispositifs (66) servant à la compensation du flux de dispersion sont disposés dans le rotor (20) de telle sorte qu'un centre de gravité commun de tous les dispositifs (66) se trouve au total a) dans l'axe de rotation (80) ou b) dans un arbre de rotor (27).

6. Machine électrique selon l'une des revendications précédentes, **caractérisée en ce que** la disposition des dispositifs (66) servant à la compensation du flux de dispersion dans le rotor (20) est symétrique, notamment à symétrie ponctuelle ou à symétrie en miroir.

7. Machine électrique selon l'une des revendications précédentes, **caractérisée en ce que** les dispositifs (66) techniquement différents servant à la compensation du flux de dispersion sont disposés dans le rotor (20) sous la forme d'un modèle de base (100) et ce modèle de base (100) se répète
a) deux fois dans le cas de quatre pôles (24, 25) dans le rotor,
b) deux ou trois fois dans le cas de six pôles (24, 25) dans le rotor,
c) deux ou quatre fois dans le cas de huit pôles (24, 25) dans le rotor,
d) deux ou cinq fois dans le cas de dix pôles (24, 25) dans le rotor,
e) deux ou trois ou quatre ou six fois dans le cas de douze pôles (24, 25) dans le rotor,
f) deux ou sept fois dans le cas de quatorze pôles (24, 25) dans le rotor,
g) deux ou quatre ou huit fois dans le cas de seize pôles (24, 25) dans le rotor, en se suivant directement sur le pourtour du rotor (20).

8. Machine électrique selon la revendication 6 ou les cas b) à g) de la revendication 7, **caractérisée en ce que** le modèle de base (100) possède au moins un espace intermédiaire vide (21).

9. Machine électrique selon l'une des revendications précédentes, **caractérisée en ce que** le corps actif (55) d'un dispositif (66) servant à la compensation du flux de dispersion possède un endroit (105) qui est éloigné au maximum de l'axe de rotation (80) et le corps actif (55) d'un autre dispositif (66), techniquement différent, servant à la compensation du flux de dispersion possède un endroit (105) qui est lui aussi éloigné au maximum de l'axe de rotation (80), un éloignement maximal (D1) de l'endroit (105) de l'un des corps actifs (55) étant supérieur à l'éloignement maximal (D2) de l'endroit (105) de l'autre corps actif (55) .

10. Machine électrique selon la revendication 9, **caractérisée en ce que** le corps actif (55) du dispositif (66) servant à la compensation du flux de dispersion (55) dont l'endroit (105) éloigné au maximum de l'axe de rotation (80) est plus éloigné de l'axe de rotation (80) qu'un endroit (105) éloigné au maximum de l'axe de rotation (80) d'un autre corps actif (55) d'un autre dispositif (66) servant à la compensation du flux de dispersion, possède un matériau magnétique qui présente une conductivité électrique spécifique plus faible que celle du matériau magnétique de l'autre corps actif.

11. Machine électrique selon l'une des revendications précédentes, **caractérisée en ce qu'**au moins un espace intermédiaire (21) ne contient aucun dispositif (66) servant à la compensation du flux de dispersion.

12. Machine électrique selon l'une des revendications précédentes, **caractérisée en ce que** les corps actifs (55) des dispositifs (66) techniquement différents servant à la compensation du flux de dispersion possèdent le même poids.

13. Machine électrique selon l'une des revendications précédentes, **caractérisée en ce que** le corps actif (55) ayant la rémanence (R-A) est un aimant en ferrite et le corps actif (55) ayant la rémanence (R-B) est un aimant en terre rare.

14. Machine électrique selon l'une des revendications 3 ou 4, **caractérisée en ce que** le corps actif (55) ayant la rémanence (R-C) est un aimant en terre rare.
